# EUROPEAN PATENT SPECIFICATION

(11) **EP 4 536 744 B1**
(45) Date of publication and mention of the grant of the patent: **11.03.2026**
(21) Application number: 23732860.4
(22) Date of filing: 12.06.2023
(51) Int. Cl.: C08L 1/14

(54) **CELLULOSE ESTER POLYMER COMPOSITION HAVING LOW COEFFICIENT OF FRICTION**
CELLULOSEESTERPOLYMERZUSAMMENSETZUNG MIT NIEDRIGEM REIBUNGSKOEFFIZIENTEN
COMPOSITION DE POLYMÈRE D'ESTER DE CELLULOSE AYANT UN FAIBLE COEFFICIENT DE FROTTEMENT

(30) Priority: 13.06.2022 US 202263366284 P
(43) Date of publication of application: 16.04.2025
(73) Proprietor: LEGO A/S, 7190 Billund (DK)
(72) Inventor: HOFMANN, John Thomas, Kingsport, Tennessee 37660 (US); FENG, Wenlai, Johnson City, Tennessee 37601 (US); SPENCER, David Chris, Kingsport, Tennessee 37660 (US); HOFMANN, Katherine Augusta, Kingsport, Tennessee 37660 (US)
(74) Representative: Guardian IP Consulting I/S
(86) International application number: PCT/EP2023/065566
(87) International publication number: WO 2023/242076

(56) References cited:
- WO-A1-2018/089573

## Description

### Field of the Invention

The invention belongs generally to the field of polymer science. In particular, the invention relates to certain cellulose ester polymer compositions having low coefficient of friction.

### Background of the Invention

Cellulose ester polymers and in particular mixed ester polymers, such as cellulose acetate propionate (CAP) polymers, are useful for making various molded plastic articles. Cellulose esters, being derived from cellulose, are bio-based and can be obtained from renewable sources such as cotton linters, wood pulp, corn fiber, other agricultural sources, and bacterial cellulose, among others. Commercially available cellulose esters that are utilized in thermoforming articles typically contain significant amounts of plasticizer to allow for processing and to impart sufficient toughness to the molded article.

CAP polymers tend to have moderate-to-high coefficient of friction (COF). Excessively high COF may result in difficulty or impossibility for use in certain applications. Manipulation of tribological behavior of polymers, for example the coefficient of friction by incorporation of additives to modify such properties may result in a corresponding substantial decrease in physical properties or trade-offs in performance of the base resin.

Construction toys, i.e. toy building bricks, is one example of molded plastic articles where coefficient of friction is an important characteristic, because it determines the effort required for a person to assemble and separate the toy building bricks. Thus, a need exists for improved polymer compositions based on cellulose esters (e.g., CAP), which have reduced coefficient of friction without compromising other desirable qualities of the polymer composition or articles manufactured therefrom.

WO2018/089573 A1 discloses a composition having an HDT greater that 95°C and a notched Izod impact strength greater than 80 J/m, comprising 55-99 wt% of a cellulose ester and 1-30 wt% of an impact modifier.

### Summary of the Invention

It has been discovered that friction of bio-based cellulose mixed ester (e.g., CAP) polymers is typically too high to enable repeat like-on-like material interactions required for many applications, resulting in high force required to join and/or separate articles, excessive polymer wear through repetitious usage, and/or potential for polymer-on-polymer binding (e.g., frictional welding). Incumbent materials for such applications may not be satisfactory or may otherwise have limitations or drawbacks depending on the specific application requirements, e.g., lack of a transparency or contain substances of present or future concern. It would also be beneficial to provide a suitable material with a sustainability attribute, such as being bio-based. Existing, non-modified cellulosic polymers, although bio-based can have certain drawbacks, e.g., do not have adequate toughness or sufficient frictional profile to be suitable for certain applications.

The present invention proposes a means to decrease the friction of cellulose ester (e.g., CAP) polymers via incorporation of various novel combinations of additives. In embodiments, reduction of the coefficient of friction was achieved by incorporation of additives including waxes and/or organosiloxanes, while sufficient balance of other properties, e.g., toughness and stiffness, was achieved by incorporation of certain other additives, e.g., impact modifiers. Further, certain embodiments also maintain clarity while improving certain properties, e.g., impact toughness, and decreasing frictional performance.

A frictionally modified cellulose ester (e.g., CAP) polymer is provided with increased ductility exhibiting a tunable frictional profile comparable with that of traditional engineering polymers such as acrylonitrile-butadiene-styrene polymers (ABS) or polycarbonates, capable of exhibiting similar frictional responses (static, kinetic coefficient of friction) across a wide range of contact pressures and part geometries. Notably, however, physical properties such as toughness and modulus, after modification, are maintained compared to ABS. Additionally, some embodiments offer a route to maintaining clarity in addition to maintaining toughness/stiffness.

The present invention discloses a modified cellulose ester composition, which is particular suitable for use in manufacturing an injection molded toy building brick made of biobased material with the desired combination of physical and mechanical properties, such as satisfactory coefficient of friction and toughness.

### Brief Description of the Figures

Embodiments of the present invention are described herein with reference to the following drawing figures, wherein:
FIG. 1 is a perspective view of a traditional box-shaped toy building brick.
FIG. 2 is a bottom view of a traditional box-shaped toy building brick.

### Detailed Description of the Invention

In a first aspect, a cellulose ester composition is provided that comprises at least one cellulose ester; at least one impact modifier; at least one frictional additive chosen from waxes and siloxanes; and optionally, one or more plasticizers. In embodiments, the cellulose ester composition has a heat deflection temperature (HDT) that exceeds 85°C. Unless specifically stated otherwise herein, HDT is measured according to ASTM D648 at a 0.455 MPa stress level after conditioning for 4 hours at 70°C. It has been found that cellulose ester compositions can be provided that have a high HDT, in combination with good toughness and frictional properties (as described more fully herein).

In one embodiment, the plasticizer is present in an amount that does not substantially reduce the HDT of the cellulose ester composition compared to a similar composition without the plasticizer. In embodiments, the HDT does not change (e.g., reduce) more than 10%, or 5%, or 2%, as a result of including the plasticizer.

In one embodiment, cellulose ester compositions are described that contain no plasticizer, but contain 1-30 wt%, or 1-15 wt%, or 2-10 wt%, or 10-30 wt%, or 15-30 wt% impact modifier, based on the total weight of the cellulose ester composition, and have HDT values greater than 85°C, and have notched Izod impact strength values greater than 80 J/m.

In another embodiment, cellulose ester compositions are provided that contain no plasticizer, but are melt processable. In embodiments, the melt processable cellulose ester compositions contain 1-30 wt%, or 1- 15 wt%, or 2-10 wt%, or 10-30 wt%, or 15-30 wt% impact modifier, based on the total weight of the cellulose ester composition, and have HDT values greater than 85°C, and notched Izod impact strength values greater than 80 J/m, and spiral flow values of at least 15 inches when measured at 240°C.

In another embodiment, the melt processable cellulose ester compositions contain 2 wt% - 15 wt% impact modifier, based on the total weight of the cellulose ester composition, and have HDT values greater than 85°C, and notched Izod impact strength values greater than 80 J/m, and viscosities at 240°C and 400 rad/sec less than 10,000 P.

In another embodiment, cellulose ester compositions are provided that have a total DS/AGU in the range from about 2 to about 2.99 and the DS/AGU of acetyl ranges from about 0 to about 2.2, with the remainder of the ester groups comprising propionyl, butyryl or combinations thereof.

In one embodiment, melt processable cellulose ester compositions are described that contain up to 15 wt% plasticizer, or up to 10 wt% plasticizer; 1-30 wt%, or 1-15 wt%, or 2-10 wt% impact modifier; and have HDT values greater than 85°C, and have notched Izod impact strength values greater than 80 J/m.

In another embodiment, melt processable cellulose ester compositions are described that contain up to 15 wt% plasticizer or up to 10 wt% plasticizer, based on the total weight of the cellulose ester composition; 1-30 wt%, or 1-15 wt%, or 2-10 wt% impact modifier, based on the total weight of the cellulose ester composition; and that have HDT values greater than 85°C, notched Izod impact strength values greater than 80 J/m, and spiral flow values of at least 15 inches when measured at 240°C.

In another embodiment, melt processable cellulose ester compositions are described that contain up to 15 wt% plasticizer or up to 10 wt% plasticizer, based on the total weight of the cellulose ester composition; 1-30 wt%, or 1- 15 wt%, or 2-10 wt% impact modifier, based on the total weight of the cellulose ester composition; and that have HDT values greater than 85°C, notched Izod impact strength values greater than 80 J/m, and viscosities at 240°C and 400 rad/sec less than 10,000 P.

In other embodiments, the melt processable cellulose ester compositions described above, optionally contain some plasticizer. In embodiments, the plasticizer is present in an amount that does not substantially reduce the HDT of the cellulose ester composition compared to a similar composition without the plasticizer. In embodiments, the HDT does not change (e.g., reduce) more than 10%, or 5%, or 2%, as a result of including the plasticizer.

In one embodiment, a cellulose ester composition is provided comprising at least one cellulose ester, at least one impact modifier, and optionally, at least one plasticizer. In one embodiment, the cellulose ester is CAP and the composition contains 0-5 wt%, 0-2 wt%, 0- less than 2 wt%, or 0-1 wt% plasticizer. In one embodiment, the cellulose ester is CAP and contains no plasticizer.

In another embodiment, a cellulose ester composition is provided comprising at least one cellulose ester, and at least one impact modifier and at least one plasticizer. In one embodiment, the cellulose ester is cellulose acetate (CA) and contains 1-15 wt% plasticizer. In embodiments, the cellulose ester is CA and the composition contains 1 - 10 wt%, or 1 - less than 10 wt%, or 1-9 wt% plasticizer.

In one aspect, a cellulose ester composition is provided that comprises:
(a) at least one cellulose ester;
(b) at least one impact modifier in an amount in a range from about 1 to about 30 weight percent;
(c) at least one frictional additive chosen from waxes and siloxanes in an amount in a range from about 0.1 to about 12 weight percent; and
(d) optionally, one or more plasticizers in an amount in the range from 0 to about 30 weight percent, in each case weight percent is based on the total weight of the cellulose ester composition.

In embodiments, a cellulose ester composition is provided that comprises 67 to 99 wt% of at least one cellulose ester, 1 to 30 wt% of at least one impact modifier, 0.1 to 5 wt% of at least one frictional additive, and 0 to 3 wt% of at least one plasticizer, based on the total weight of the composition, wherein said cellulose ester is chosen from one or more of cellulose propionate (CP), cellulose butyrate (CB), cellulose acetate propionate (CAP), cellulose acetate butyrate (CAB), cellulose propionate butyrate (CPB), cellulose tripropionate (CTP), or cellulose tributyrate (CTB); wherein said impact modifier is an acrylic core-shell impact modifier; and wherein said composition has an HDT value greater than 85°C, and a notched Izod impact strength value greater than 80 J/m measured according to ASTM D256 on 3.2mm thick bars at 23°C, after conditioning the bars at 23°C and 50% RH for 48 hours.

In another aspect, the cellulose ester composition further comprises a polymeric aliphatic polyester ("PAP"). In embodiments, the PAP is a polymeric aliphatic polyester that comprises residues of one or more C₂ to C₄ alkane diols and residues of one or more C₄ to C8 alkyl dicarboxylic acids, or that comprises residues of a ring-opened lactone. In embodiments, the PAP comprises residues of a C₂ to C₄ alkane diol and residues of C₄ to C₆ alkyl dicarboxylic acid. In embodiments, the PAP comprises residues of ethylene glycol or 1,4-butanediol and residues of succinic acid, glutaric acid and/or adipic acid. In embodiments, the PAP comprises residues of ethylene glycol or 1,4-butanediol and residues of succinic acid. In embodiments, the PAP is chosen from poly(butylene succinate) or poly(ethylene succinate). In embodiments, the PAP is chosen from poly(butylene adipate) or poly(ethylene adipate). In embodiments, the PAP is poly(butylene succinate) (PBS). In another embodiment, the aliphatic polyester comprises residues of the ring opening of a lactone (cyclic ester) such as caprolactone. In embodiments, the PAP can be a copolymer, e.g., containing residues of succinic acid and adipic acid. In embodiments, the PAP has a number average molecular weight (Mn) greater than 2000, or 3000 or higher, or 5000 or higher, or 7000 or higher, or 8000 or higher, or 9000 or higher, or 9500 or higher, or 10000 or higher. In embodiments, the PAP has a number average molecular weight (Mn) in the range from 5000 to 20000, or 8000 to 20000, or 8000 to 15000, or 9000 to 12000. Molecular weight (and Mn) can be determined using gel permeation chromatography (GPC) with a refractive index detector and polystyrene standards employing a solvent of methylene chloride. In an embodiment, the PAP is poly(butylene succinate) having a Mn in the range from 5000 to 20000; or 10000 to 20000; or 15000 to 20000.

In embodiments, the PAP can be any poly (butylene succinate) material. In embodiments, the PAP can be chosen from PBS random copolymers that are obtained from succinic acid or succinate, 1,4-butanediol, and other dicarboxylic acids or alkylenediols, such as adipic acid, glutaric acid, succinic acid with substituted side groups, suberic acid, 1,3-propanediol, and other substituted glycols. Examples of poly (butylene succinate) materials include, but are not limited to, poly(butylene succinate- co -butylene adipate) (PBSA), poly(butylene succinate- co -butylene terephthalate), poly(butylene succinate- co -propylene succinate), poly(butylene succinate-co-butylene methylsuccinate), poly(butylene succinate-co-butylene dimethylsuccinate), poly(butylene succinate-co-butylene phenylsuccinate), and blends of poly(butylene succinate) containing poly(butylene adipate), poly(ethylene succinate), and/or poly(ethylene adipate). In one embodiment, the PAP is poly(butylene succinate) (PBS).

In certain embodiments, the MFR of the PAP measured at 190°C with a 2.16 kg load as per ASTM Test Method D1238 is less than 30, or less than 25, or less than 20, or less than 15, or less than 10, or less than 6, or about 5 or less. In embodiments, the PAP has an MFR of at least 0.5, or 1, or 2.

In embodiments, the PAPs have an MFR (190°C, 2.16 kg) in the range of 0.5-30, or 0.5-25, or 0.5-20, or 0.5-15, or 0.5-10, or 0.5-6, or 0.5-5. In embodiments, the PAPs have Elongation at Break of 100% or greater, or 150% or greater, or 200% or greater, or 250% or greater. In one embodiment, the cellulose ester composition contains at least one PAP having an MFR (190°C, 2.16 kg) of 10 or less and Elongation at Break of 100% or greater. In certain embodiments, the amount of PAP in the cellulose ester composition is from 0.5 to 40 wt%, or 1 to 35 wt%, or 1 to 30 wt%, or 1 to 25 wt%, or 1 to 20 wt%, or 1 to 15 wt%, or 1 to 10 wt%, or 1 to 8 wt%, or 2 to 30 wt%, or 2 to 20 wt%, or 2 to 10 wt%, or 2 to 8 wt%, or 2.5 to 30 wt%, or 2.5 to 25 wt%, or 2.5 to 20 wt%, or 2.5 to 15 wt%, or 2.5 to 10 wt%, or 2.5 to 8 wt%, or 3 to 30 wt%, or 3 to 25 wt%, or 3 to 20 wt%, or 3 to 15 wt%, or 3 to 10 wt%, or 3 to 8 wt%, or 4 to 30 wt%, or 4 to 25 wt%, or 4 to 20 wt%, or 4 to 15 wt%, or 4 to 10 wt%, or 4 to 8 wt%, or 5 to 30 wt%, or 5 to 25 wt%, or 5 to 20 wt%, or 5 to 15 wt%, or 5 to 10 wt%, or 5 to 8 wt%, or 7 to 18 wt%, or 8 to 12 wt%, based on the total cellulose ester composition. In certain embodiments, the composition contains at least one impact modifier in an amount from 1 to 20 wt%, or 1 to 15 wt%, or 1 to 10 wt%, or 1 to 8 wt%, or 2 to 15 wt%, or 2 to 10 wt%, or 2 to 8 wt%, or 3 to 15 wt%, or 3 to 10 wt%, or 3 to 8 wt%, or 4 to 15 wt%, or 4 to 10 wt%, or 4 to 8 wt%, and optionally at least one monomeric plasticizer in addition to the PAP, and the amount of the PAP in the cellulose ester composition is from 0.5 to 40 wt%, or 1 to 35 wt%, or 2 to 30 wt%, or 2 to 20 wt%, or 2 to 10 wt%, or 3 to 10 wt%, or 3 to 8 wt%, or 3 to 7 wt%, or 4 to 8 wt%; or 4 to 7 wt%, or 5 to 7 wt%, based on the total cellulose ester composition.

### Cellulose Ester

In embodiments, the cellulose ester utilized in this invention can be any that is known in the art. Cellulose esters that can be used for the present invention generally comprise repeating units of the structure: 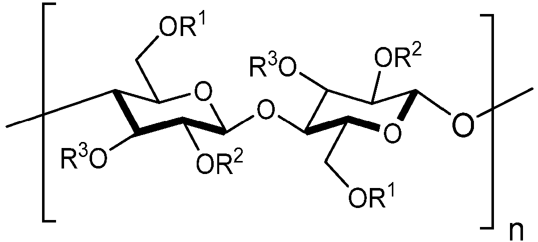 wherein R¹, R², and R³ are selected independently from the group consisting of hydrogen or straight chain alkanoyl having from 2 to 10 carbon atoms. For cellulose esters, the substitution level is usually expressed in terms of degree of substitution (DS), which is the average number of non-OH substituents per anhydroglucose unit (AGU). Generally, conventional cellulose contains three hydroxyl groups in each AGU unit that can be substituted; therefore, DS can have a value between zero and three. However, low molecular weight cellulose mixed esters can have a total degree of substitution slightly above 3 due to end group contributions. Native cellulose is a large polysaccharide with a degree of polymerization from 250 - 5,000 even after pulping and purification, and thus the assumption that the maximum DS is 3.0 is approximately correct. However, as the degree of polymerization is lowered, as in low molecular weight cellulose mixed esters, the end groups of the polysaccharide backbone become relatively more significant, thereby resulting in a DS that can range in excess of 3.0. Low molecular weight cellulose mixed esters are discussed in more detail subsequently in this disclosure. Because DS is a statistical mean value, a value of 1 does not assure that every AGU has a single substituent. In some cases, there can be unsubstituted anhydroglucose units, some with two and some with three substituents, and typically the value will be a non-integer. Total DS is defined as the average number of all of substituents per anhydroglucose unit. The degree of substitution per AGU can also refer to a particular substituent, such as, for example, hydroxyl, acetyl, butyryl, or propionyl. In embodiments, the degree of polymerization for the cellulose ester is lower than that of the native cellulose. In embodiments, n is an integer in a range from 25 to 250, or 25 to 200, or 25 to 150, or 25 to 100, or 25 to 75.

In embodiments, the cellulose ester utilized can be a cellulose triester or a secondary cellulose ester. Examples of cellulose triesters include, but are not limited to, cellulose triacetate, cellulose tripropionate, or cellulose tributyrate. Examples of secondary cellulose esters include cellulose acetate, cellulose acetate propionate, and cellulose acetate butyrate. For purposes of this disclosure, cellulose acetate (CA) includes cellulose acetate and/or cellulose diacetate, unless specifically stated otherwise.

In one embodiment, the cellulose ester can be chosen from cellulose acetate (CA), cellulose propionate (CP), cellulose butyrate (CB), cellulose acetate propionate (CAP), cellulose acetate butyrate (CAB), cellulose propionate butyrate (CPB), cellulose acetate isobutyrate (CAIB), and the like, or combinations thereof. Examples of such cellulose esters are described in U.S. Pat. Nos. 1,698,049; 1,683,347; 1,880,808; 1,880,560; 1,984,147, 2,129,052; and 3,617,201. In one embodiment, the cellulose ester is CAP.

In one embodiment, the cellulose ester can be chosen from cellulose propionate (CP), cellulose butyrate (CB), cellulose acetate propionate (CAP), cellulose acetate butyrate (CAB), cellulose propionate butyrate (CPB), cellulose tripropionate (CTP), or cellulose tributyrate (CTB), but not from cellulose acetate (CA).

In embodiments, the cellulose esters have at least 2 anhydroglucose rings and can have between at least 50 and up to 5,000 anhydroglucose rings. The number of anhydroglucose units per molecule is defined as the degree of polymerization (DP) of the cellulose ester. In embodiments, cellulose esters can have an inherent viscosity (IV) of about 0.2 to about 3.0 deciliters/gram, or about 0.5 to about 1.8, or about 1 to about 1.5, as measured at a temperature of 25°C for a 0.25 g sample in 100 ml of a 60/40 by weight solution of phenol/tetrachloroethane. Examples of cellulose esters include, but are not limited to, cellulose acetate, cellulose propionate, cellulose butyrate, cellulose acetate propionate (CAP), cellulose acetate butyrate (CAB), cellulose propionate butyrate, and the like. In embodiments, cellulose esters useful herein can have a DS/AGU of about 2 to about 2.99, and the substituting ester can comprise either acetyl, propionyl and butyryl, or any combinations of these. In another embodiment, the total DS/AGU ranges from about 2 to about 2.99 and the DS/AGU of acetyl ranges from about 0 to 2.2, with the remainder of the ester groups comprising propionyl, butyryl or combinations thereof.

In another embodiment, the total DS/AGU ranges from about 2 to about 2.99 and the DS/AGU of acetyl ranges from about 0 to 1.2, with the remainder of the ester groups comprising propionyl, butyryl or combinations thereof. In another embodiment, the total DS/AGU ranges from about 2 to about 2.99 and the DS/AGU of acetyl ranges from about 0 to 0.5, with the remainder of the ester groups comprising propionyl, butyryl or combinations thereof.

In certain embodiments, the cellulose ester has a total percentage of propionyl by weight in the range from 5 to 52%, or 10 to 52%, or 15 to 52%, or 20 to 52%, or 25 to 52%, or 30 to 52%, or 35 to 52%, or 40 to 52%, or 45 to 52%, or 49 to 52%, or 5 to 50%, or 10 to 50%, or 15 to 50%, or 20 to 50%, or 25 to 50%, or 30 to 50%, or 35 to 50%, or 40 to 50%, or 45 to 50%, or 5 to less than 50%, or 10 to less than 50%, or 15 to less than 50%, or 20 to less than 50%, or 25 to less than 50%, or 30 to less than 50%, or 35 to less than 50%, or 40 to less than 50%, or 45 to less than 50%, or 35 to less than 50%, or 40 to less than 50%, or 45 to less than 50%, or 5 to 38%, or 10 to 38%, or 15 to 38%, or 20 to 38%, or 25 to 38%, or 30 to 38%, or 35 to 38%, or 5 to 35%, or 5 to 35%, or 10 to 35%, or 15 to 35%, or 20 to 35%, or 25 to 35%, or 30 to 35%, or 5 to 30%, or 10 to 30%, or 15 to 30%, or 20 to 30%, or 25 to 30%, or 5 to 20%, or 10 to 20%,based on the total weight of the cellulose ester polymer.

In certain embodiments, the cellulose ester has a total percentage of butyryl by weight in the range from 5 to 57%, or 10 to 57%, or 15 to 57%, or 20 to 57%, or 25 to 57%, or 30 to 57%, or 35 to 57%, or 40 to 57%, or greater than 40 to 57%, or 41 to 57%, or 45 to 57%, or 50 to 57%, or 5 to 55%, or 10 to 55%, or 15 to 55%, or 20 to 55%, or 25 to 55%, or 30 to 55%, or 35 to 55%, or 40 to 55%, or greater than 40 to 55%, or 41 to 55%, or 45 to 55%, or 50 to 55%, or 5 to 50%, or 10 to 50%, or 15 to 50%, or 20 to 50%, or 25 to 50%, or 30 to 50%, or 35 to 50%, or 40 to 50%, or greater than 40 to 50%, or 41 to 50%, or 45 to 50%, or 5 to 45%, or 10 to 45%, or 15 to 45%, or 20 to 45%, or 25 to 45%, or 30 to 45%, or 35 to 45%, or 40 to 45%, or greater than 40 to 45%, or 41 to 45%, or 5 to 35%, or 10 to 35%, or 15 to 35%, or 20 to 35%, or 25 to 35%, or 30 to 35%,or 5 to less than 32%, or 10 to less than 32%, or 15 to less than 32%, or 20 to less than 32%, or 25 to less than 32%, or 5 to 30%, or 10 to 30%, or 15 to 30%, or 20 to 30%, or 25 to 30%, based on the total weight of the cellulose ester polymer.

In certain embodiments, the cellulose ester is cellulose propionate butyrate or cellulose acetate propionate butyrate, with the combined propionate and butyryl content as a percentage of total weight of the polymer in the range from 15% to 55%, or 15% to 50%, or 15% to 45%, or 15% to 40%, or 15% to 35%, or 15% to 30%, or 15% to 25%, or 15% to 20%, or 20% to 55%, or 20% to 50%, or 20% to 45%, or 20% to 40%, or 20% to 35%, or 20% to 30%, or 20% to 25%, or 25% to 55%, or 25% to 50%, or 25% to 45%, or 25% to 40%, or 25% to 35%, or 25% to 30%, or 30% to 55%, or 30% to 50%, or 30% to 45%, or 30% to 40%, or 30% to 35%, or 35% to 55%, or 35% to 50%, or 35% to 45%, or 35% to 40%, 40% to 55%, or 40% to 50%, or 40% to 45%, or 40% to 55%, or 40% to 55%, or 40% to 55%, or 40% to 45%, or 45% to 55%, or 45% to 50%, or 50% to 55%.

In one embodiment, the cellulose ester is CA. In certain embodiments, the cellulose ester has a total percentage of acetyl by weight in the range from 5 to 45%, or 10 to 45%, or 15 to 45%, or 20 to 45%, or 25 to 45%, or 30 to 45%, or 35 to 45%, or 40 to 45%, or 5 to 40%, or 10 to 40%, or 15 to 40%, or 20 to 40%, or 25 to 40%, or 30 to 40%, or 35 to 40%, or 5 to 35%, or 10 to 35%, or 15 to 35%, or 20 to 35%, or 25 to 35%, or 30 to 35%, or 5 to 30%, or 10 to 30%, or 15 to 30%, or 20 to 30%, or 25 to 30%, or 5 to 25%, or 10 to 25%, or 15 to 25%, or 20 to 25%, based on the total weight of the cellulose ester polymer.

In certain embodiments, the cellulose ester has a total percentage of propionyl by weight in the range from 1 to 20%, or 1 to 15%, or 1 to 10%, or 1 to 5%, or 2 to 20%, or 2 to 15%, or 2 to 10%, or 2 to 5%, or 3 to 20%, or 3 to 15%, or 3 to 10%, or 3 to 5%, or 4 to 20%, or 4 to 15%, or 4 to 10%, or 5 to 20%, or 5 to 15%, or 5 to 10%, based on the total weight of the cellulose ester polymer.

In certain embodiments, the cellulose ester has a total percentage of butyryl by weight in the range from 1 to 20%, or 1 to 15%, or 1 to 10%, or 1 to 5%, or 2 to 20%, or 2 to 15%, or 2 to 10%, or 2 to 5%, or 3 to 20%, or 3 to 15%, or 3 to 10%, or 3 to 5%, or 4 to 20%, or 4 to 15%, or 4 to 10%, or 5 to 20%, or 5 to 15%, or 5 to 10%, based on the total weight of the cellulose ester polymer.

In embodiments, any of the cellulose esters discussed above can also contain up to 10% residual hydroxyl units, preferably 0.5% to 5%.

Cellulose esters can be produced by any method known in the art. Examples of processes for producing cellulose esters are taught in Kirk-Othmer, Encyclopedia of Chemical Technology, 5th Edition, Vol. 5, Wiley-Interscience, New York (2004), pp. 394-444. Cellulose, the starting material for producing cellulose esters, can be obtained in different grades and sources such as from cotton linters, softwood pulp, hardwood pulp, corn fiber and other agricultural sources, and bacterial cellulose, among others.

One method of producing cellulose esters is esterification of the cellulose by mixing cellulose with the appropriate organic acids, acid anhydrides, and catalysts. Cellulose is then converted to a cellulose triester. Ester hydrolysis is then performed by adding a water-acid mixture to the cellulose triester, which can then be filtered to remove any gel particles or fibers. Water is then added to the mixture to precipitate the cellulose ester. The cellulose ester can then be washed with water to remove reaction by-products followed by dewatering and drying.

The cellulose triesters to be hydrolyzed can have three substitutents selected independently from alkanoyls having from 2 to 10 carbon atoms. Examples of cellulose triesters include cellulose triacetate, cellulose tripropionate, and cellulose tributyrate or mixed triesters of cellulose such as cellulose acetate propionate, and cellulose acetate butyrate. These cellulose esters can be prepared by a number of methods known to those skilled in the art. For example, cellulose esters can be prepared by heterogeneous acylation of cellulose in a mixture of carboxylic acid and anhydride in the presence of a catalyst such as H₂SO₄. Cellulose triesters can also be prepared by the homogeneous acylation of cellulose dissolved in an appropriate solvent such as LiCl/DMAc or LiCl/NMP.

Those skilled in the art will understand that the commercial term of cellulose triesters also encompasses cellulose esters that are not completely substituted with acyl groups. For example, cellulose triacetate commercially available from Eastman Chemical Company, Kingsport, TN, U.S.A., typically has a DS from about 2.85 to about 2.99.

After esterification of the cellulose to the triester, part of the acyl substituents can be removed by hydrolysis or by alcoholysis to give a secondary cellulose ester. As noted previously, depending on the particular method employed, the distribution of the acyl substituents can be random or non-random. Secondary cellulose esters can also be prepared directly with no hydrolysis by using a limiting amount of acylating reagent. This process is particularly useful when the reaction is conducted in a solvent that will dissolve cellulose. All of these methods yield cellulose esters that are useful in this invention.

In one embodiment, the secondary cellulose esters useful in the present invention have an absolute weight average molecular weight (Mw) from about 5,000 to about 400,000 as measured by gel permeation chromatography (GPC) according to ASTM D6474. The following method is used to calculate the absolute weight average molecular weight values (Mw) for CE. The solvent is THF stabilized with BHT Preservative. The instrumentation for the THF/cellulose ester procedure consists of the following Agilent 1200 series components: degasser, isocratic pump, auto-sampler, column oven, UV/Vis detector and a refractive index detector. The test temperature is 30°C and flow rate is 1.0 ml/min. A sample solution of 25 mg cellulose ester in 10 ml THF with BHT preservative and 10 µl toluene flow rate marker is made. The injection volume is 50 µl. The column set is Polymer Laboratories 5 µm PLgel, Guard + Mixed C + Oligopore. The detection is by refractive index. The calibrants are monodisperse polystyrene standards, Mw=580 to 3,220,000 from Polymer Laboratories. The universal calibration parameters are as follows: PS (K=0.0001280 and a=0.7120) and CE (K=0.00007572 and a=0.8424). The universal calibration parameters above were determined by light scattering and viscometery to yield the correct weight average molecular weights. In a further embodiment, the Mw is from about 15,000 to about 300,000. In yet further embodiments, the Mw ranges from about 10,000 to about 250,000; from about 15000 to 200000; from about 20,000 to about 150,000; from about 50,000 to about 150,000, or from about 70,000 to about 120,000.

In embodiments, the polymer-based resin comprises a cellulose ester which has an absolute weight average molecular weight in the range of from about 40,000 Da to about 200,000 Da measured according to ASTM D5296 using tetrahydrofuran as a solvent and a flow rate of 1 mL/min. In certain embodiments, the cellulose ester has an absolute weight average molecular weight in the range of from about 50,000 Da to about 200,000 Da, or 50,000 Da to about 170,000 Da, or 50,000 Da to about 120,000 Da, or 50,000 Da to about 90,000 Da, or 60,000 Da to about 200,000 Da, or 60,000 Da to about 170,000 Da, or 60,000 Da to about 120,000 Da, or 60,000 Da to about 90,000 Da, or 90,000 Da to about 170,000 Da, or 90,000 Da to about 120,000 Da, or 120,000 Da to about 170,000 Da, or 120,000 Da to about 200,000 Da, measured according to ASTM D5296 using tetrahydrofuran as a solvent and a flow rate of 1 mL/min.

Commercial secondary cellulose esters can be prepared by initial acid catalyzed heterogeneous acylation of cellulose to form the cellulose triester. After a homogeneous solution in the corresponding carboxylic acid of the cellulose triester is obtained, the cellulose triester is then subjected to hydrolysis until the desired degree of substitution is obtained. After isolation, a random secondary cellulose ester is obtained. That is, the relative degree of substitution (RDS) at each hydroxyl is roughly equal.

Some examples of cellulose esters that may be useful in the present invention can be prepared using techniques known in the art and can be obtained from Eastman Chemical Company, Kingsport, TN, U.S.A., e.g., Eastman^{™} Cellulose Acetate Propionate CAP 482-20, Eastman^{™} Cellulose Acetate Propionate CAP 141-20, Eastman^{™} Cellulose Acetate Butyrate CAB 381-20, Cellulose Acetate Butyrate CAB 171-15 and Eastman^{™} Cellulose Acetate CA 398-30.

In embodiments, the cellulose esters utilized in this invention can also contain chemical functionality and are described herein as either derivatized, modified, or functionalized cellulose esters. Functionalized cellulose esters can be produced by reacting the free hydroxyl groups of cellulose esters with a bifunctional reactant that has one linking group for grafting to the cellulose ester and one functional group to provide a new chemical group to the cellulose ester. Examples of such bifunctional reactants include succinic anhydride which links through an ester bond and provides acid functionality; mercaptosilanes which links through alkoxysilane bonds and provides mercapto functionality; and isocyanotoethyl methacrylate which links through a urethane bond and gives methacrylate functionality.

In one embodiment, functionalized cellulose esters are produced by reacting the free hydroxyl groups of the cellulose esters with a bifunctional reactant producing a cellulose ester with at least one functional group selected from the group consisting of unsaturation (double bonds), carboxylic acids, acetoacetate, acetoacetate imide, mercapto, melamine, and long alkyl chains.

Bifunctional reactants to produce cellulose esters containing unsaturation (double bonds) functionality are described in U.S. Patents 4,839,230, 5,741,901, 5,871,573, 5,981,738, 4,147,603, 4,758,645, and 4,861,629**.**

In one embodiment, the cellulose esters containing unsaturation is produced by reacting a cellulose ester containing residual hydroxyl groups with an acrylic based compound and m-isopropyenyl-α,α'-dimethylbenzyl isocyanate. The grafted cellulose ester is a urethane-containing product having pendant (meth)acrylate and α-methylstyrene moieties. In another embodiment, the cellulose esters containing unsaturation is produced by reacting maleic anhydride and a cellulose ester in the presence of an alkaline earth metal or ammonium salt of a lower alkyl monocarboxylic acid catalyst, and at least one saturated monocarboxylic acid have 2 to 4 carbon atoms. In another embodiment, the cellulose esters containing unsaturation is produced from the reaction product of (a) at least one cellulosic polymer having isocyanate reactive hydroxyl functionality, and (b) at least one hydroxyl reactive poly(alpha,beta ethyleneically unsaturated) isocyanate.

Bifunctional reactants to produce cellulose esters containing carboxylic acid functionality are described in U.S. Patents 5,384,163, 5,723,151, and 4,758,645.

In one embodiment, the cellulose esters containing carboxylic acid functionality is produced by reacting a cellulose ester and a mono- or di-ester of maleic or furmaric acid, thereby obtaining a cellulose derivative having double bond functionality. In another embodiment, the cellulose esters containing carboxylic acid functionality has a first and second residue, wherein the first residue is a residue of a cyclic dicarboxylic acid anhydride and the second residue is a residue of an oleophilic monocarboxylic acid and/or a residue of a hydrophilic monocarboxylic acid. In yet another embodiment, the cellulose esters containing carboxylic acid functionality are cellulose acetate phthalates, which can be prepared by reacting cellulose acetate with phthalic anhydride.

Bifunctional reactants to produce cellulose esters containing acetoacetate functionality are described in U.S. Patent 5,292,877.

In one embodiment, the cellulose esters containing acetoacetate functionality are produced by contacting: (i) cellulose; (ii) diketene, an alkyl acetoacetate, 2,2,6, trimethyl-4H 1,3-dioxin-4-one, or a mixture thereof, and (iii) a solubilizing amount of solvent system comprising lithium chloride plus a carboxamide selected from the group consisting of 1-methyl-2-pyrolidinone, N,N dimethylacetamide, or a mixture thereof.

Bifunctional reactants to produce cellulose esters containing acetoacetate imide functionality are described in U.S. Patent 6,369,214.

Cellulose esters containing acetoacetate imide functionality are the reaction product of a cellulose ester and at least one acetoacetyl group and an amine functional compound comprising at least one primary amine.

Bifunctional reactants to produce cellulose esters containing mercapto functionality are described in U.S. Patent 5,082,914.

In one embodiment, the cellulose ester is grafted with a silicon-containing thiol component which is either commercially available or can be prepared by procedures known in the art. Examples of silicon-containing thiol compounds include, but are not limited to, (3-mercaptopropyl)trimethoxysilane, (3-mercaptopropyl)-dimethyl-methoxysilane, (3-mercaptopropyl)dimethoxymethylsilane, (3-mercaptopropyl)dimethylchlorosilane, (3-mercaptopropyl)dimethylethoxysilane, (3-mercaptopropyl)diethyoxy-methylsilane, and (3-mercapto-propyl)triethoxysilane.

Bifunctional reactants to produce cellulose esters containing melamine functionality are described in U.S. Patent 5,182,379.

In one embodiment, the cellulose esters containing melamine functionality are prepared by reacting a cellulose ester with a melamine compound to form a grafted cellulose ester having melamine moieties grafted to the backbone of the anhydrogluclose rings of the cellulose ester. In one embodiment, the melamine compound is selected from the group consisting of methylol ethers of melamine and aminoplast resins.

Bifunctional reactants to produce cellulose esters containing long alkyl chain functionality are described in U.S. Patent 5,750,677.

In one embodiment, the cellulose esters containing long alkyl chain functionality is produced by reaction of cellulose in a carboxamide diluents or a urea-based diluent with an acylating reagent using a titanium-containing specifies. Cellulose esters containing long alkyl chain functionality can be selected from the group consisting of cellulose acetate hexanoate, cellulose acetate nonanoate, cellulose acetate laurate, cellulose palmitate, cellulose acetate stearate, cellulose nonanoate, cellulose hexanoate, cellulose hexanoate propionate, and cellulose nonanoate propionate.

### Impact Modifiers

In embodiments, the impact modifier can be any material found to increase the impact strength of cellulose ester compositions. In one embodiment, the impact modifier can be any polymeric material classified as an elastomer with a glass transition temperature (Tg) below room temperature. Tg can be measured for example according to ASTM D3418 using a TA 2100 Thermal Analyst Instrument using a scan rate of 20°C/min. Several classes of impact modifier fit this description.

In one embodiment, the impact modifier can be selected from the class of materials known as modified polyolefins (or olefin copolymers). In this class, the olefin is copolymerized with additional monomers that limit the crystallization of the polymer, increase the amount of the chain with Tg below room temperature, and reduce the modulus below 500 MPa. Examples of modified olefins include ethylene methyl acrylate (EMA) or ethylene glycidyl methyl acrylate (EGMA) (examples include Elvaloy 4051, Lotader 3410 and Lotader 8900), ethylene butyl acetate (EBA), ethylene vinyl acetate (EVA) (examples include Levamelt 500, Levamelt 600, Levamelt 700, Levamelt 800, Elvax 40W, Evatane 28-40, Evatane 40-55, Evatane 18-150, Bynel E418 and Bynel 3101), ethylene ethyl acetate (EEA), ethylene propylene diene monomer based elastomers (EPDM) (examples include Royaltuf 498), and ethylene propylene rubber elastomers (EPR).

In one embodiment, the impact modifier can be a block copolymer in which at least one segment of the chain has a Tg below room temperature, referred to as the soft segment, and at least one segment of the chain has a Tg or Tm above room temperature, referred to as the hard segment. These block copolymers are also commonly referred to as thermoplastic elastomers (TPEs). Examples of block copolymers of this class include styrenic materials such as poly(styrene-butadiene-styrene) (SBS), poly(styrene-ethylene-butylene-styrene) (SEBS), and styrene-isoprene-rubber elastomers (SIS) (examples include Kraton G1657MS, Kraton FG1901 G and Kraton FG1924 G); thermoplastic urethanes (TPU) (examples include Elastolan 1170Z, Estane 2355, Estane ALR CL87A and Estane ALR 72A); polyester-ether copolymers (examples include Ecdel 9966 and Hytrel 3078) or polyamide-ether copolymers (examples include Pebax 5533).

In one embodiment, the impact modifier can be selected from the class of emulsion-prepared materials known as core-shell impact modifiers. In one embodiment, the impact modifier is an MBS core-shell impact modifier such as a methacrylate-butadiene-styrene that has a core made out of butadiene-styrene copolymers and shell made out of methyl methacrylate-styrene copolymer. In another embodiment, the impact modifier is an acrylic core-shell impact modifier that has a core made from an acrylic polymer, such as butyl acrylate or styrene butyl acrylate, and shell made from polymethylmethacrylate or styrene methylmethacrylate copolymer.

In embodiments, the MBS impact modifier can comprise graft polymer compositions comprising 10 to 70 percent by weight of a polymer or a copolymer of butadiene and grafts of firstly methyl(meth)acrylate and cross-linker, and secondly of styrene, and thirdly of methyl(meth)acrylate with an optional cross-linker.

Monomers suitable for polymerization with a conjugated diolefin and preferably with butadiene, can include alkenyl aromatic compounds and preferably vinyl aromatic compounds such as styrene, divinylbenzene, alphamethyl styrene, vinyl toluene, hydrogenated styrene; lower (CZ-Cu) alkyl acrylates such as ethyl acrylate, n-propylacrylate, n-butyl acrylate, Z-methylbutylacrylate, 3-methylbutyl acrylate, amylacrylate, n-hexylacrylate, Z-ethylhexyl acrylate; lower (C2-C12) alkyl(meth)acrylates; acrylonitriles; olefins; and the like; or a combination of any of the foregoing.

Suitable cross-linking agents include divinylbenzene; di(meth)acrylates; diacrylates such as the diacrylate of mono-, di- or polyethylene glycol; their (meth)acrylates; divinyl sulfide; divinyl ether; vinyl acrylate; vinyl(meth)acrylate; trivinylbenzene; trimethylolpropane; tri(meth)acrylate; triallyl cyanurate and triallyl isocyanurate.

In one embodiment, the MBS core-shell impact modifier can comprise a copolymer of butadiene and styrene and most preferably a terpolymer of butadiene, styrene, and divinylbenzene. Although the relative amounts of the monomers which comprise the copolymeric substrate may vary, the butadiene component will typically comprise from about 30 to 100 parts by weight, the styrene component will comprise from 0 to about 70 parts by weight, and the divinylbenzene component will comprise from 0 to about 5 parts by weight based upon 100 parts by weight of butadiene, styrene, and divinylbenzene combined. In an embodiment, the copolymer substrate can comprise from about 50 to about 90 parts by weight of butadiene, from about 10 to about 50 parts by weight of styrene, and from 0 to about 5 parts by weight of divinylbenzene on the same basis, and most preferably, from about 65 to about 85 parts by weight of butadiene, from about 15 to about 35 parts by weight of styrene, and from about 0.5 to about 2.0 parts by weight of divinylbenzene on the same basis.

Examples of methacrylate-butadiene-styrene core shell polymers are those described in, but not limited to, patents US 4,446,585, US 5,534,594, and US 6,331580. MBS core-shell impact modifiers can be obtained as Kane Ace B564 from Kaneka, Clearstrength from Arkema, Metablen C and Metablen E from Mitsubishi Chemical, Paraloid from Dow, and Visiomer from Evonik.

In one embodiment, the core shell impact modifier is an acrylic impact modifier comprising about 25 to 95 weight percent of a first elastomeric phase polymerized from a monomer system comprising about 75 to 99.8 percent by weight of a (C1 to C6) alkyl acrylate, 0.1 to 5 percent by weight cross-linking monomer, and 0.1 to 5 percent by weight graft linking monomer, and about 75 to 5 weight percent of a final, rigid thermoplastic phase free of epoxy groups polymerized in the presence of said elastomeric phase.

Examples of useful acrylates are methyl acrylate, ethyl acrylate, butyl acrylate, 2-ethylhexyl acrylate and the like. In some embodiments, the acrylates are n-butyl acrylate and ethyl acrylate.

Graft linking monomer is defined as polyethylenically unsaturated monomer which has both a highly reactive double bond and a double bond of lower reactivity such that the highly reactive double bond tends to polymerize during the first stage monomer polymerization leaving a remaining double bond for polymerization during the next stage polymerization and thereby to graft link the first stage with the second stage polymers. In some embodiments, the graft linking monomers are allyl methacrylate, allyl acrylate and diallyl maleate. In an embodiment, 0.05 to 3 percent graft linking monomer is present based on first stage monomer systems. Cross linking monomer is also preferably present, generally in amounts of about 0.05 to 3 percent by weight based on first stage monomer system, and is defined as a polyethylenically unsaturated monomer having at least two double bonds of about equal reactivity so as to cause cross-linking in the first stage polymerization. Examples of typical cross-linking monomers are 1,3-butylene diacrylate, 1,3-butylene dimethacrylate, divinylbenzene and the like.

By "epoxy functionality" it is meant the epoxy units which are pendant from the final stage polymer. In some embodiments, epoxy functionality is incorporated into the final stage polymer by use of epoxy containing monomer such as glycidyl acrylate or glycidyl methacrylate in the final stage monomer mixture.

Examples of acrylic core shell polymers are those described in, but not limited to, patents US 3,448,173, US 3,655,825, and US 3,853,968. Examples of suitable acrylic impact modifiers are Kane Ace ECO100 and M570 from Kaneka, Durastrength from Arkema, Elvaloy and Elvaloy HP from DuPont, Metablen W from Mitsubishi Chemical, and Paraloid from Dow.

In one class of this embodiment, the impact modifier is an ABS core-shell impact modifier that has a core made out of butadiene-styrene copolymers and shell made out of acrylonitrile-styrene copolymer. Examples of ABS core-shell impact modifiers include Blendex from Galata Chemicals and Elix from Elix Polymers.

In one class of this embodiment, the impact modifier is a silicone-acrylic core-shell impact modifier that has a core made out of silicone-acrylic rubber and shell made out of PMMA copolymer or methyl methacrylate-styrene copolymer. Examples of silicone-acrylic core-shell impact modifiers include an Metablen S from Mitsubishi Chemical Company.

In one embodiment, the impact modifier has a neutral acidity. It is believed that this will help prevent the cellulose esters from degrading during the melt processing of the compositions.

In one embodiment, the impact modifier can be either a non-reactive impact modifier or a reactive impact modifier, or combination of both. The impact modifiers used can also improve mechanical and physical properties of the cellulose ester compositions.

In one embodiment, where non-reactive impact modifiers are utilized, the impact modifier contains a first polymeric chain segment that is more chemically or physically compatible with the cellulose ester than another polymeric chain segment. In an embodiment, the first segment contains polar functional groups, which provide compatibility with the cellulose ester, including, but not limited to, such polar functional groups as ethers, esters, amides, alcohols, amines, ketones and acetals. Compatibility is defined by the preferential interaction of the first polymer chain segment with the cellulose ester polymer relative to the second segment and can mean molecular scale or microscale interactions. The first segment may consist of oligomers or polymers of the following: cellulose esters; cellulose ethers; polyoxyalkylene, such as, polyoxyethylene, polyoxypropylene, polyoxybutylene; polyglycols, such as, polyethylene glycol, polypropylene glycol, polybutylene glycol; polyesters, such as, polycaprolactone, polylactic acid, aliphatic polyesters, aliphatic-aromatic copolyesters; polyacrylates and polymethacrylates; polyacetals; polyvinylpyrrolidone; polyethylenevinyl acetate; polyvinyl acetate; and polyvinyl alcohol. In one embodiment, the first segment is polyethylenevinyl acetate; polyoxyethylene or polyvinyl alcohol.

In embodiments, the second segment can be either saturated or unsaturated hydrocarbon groups or contain both saturated and unsaturated hydrocarbon groups. The second segment can be an oligomer or a polymer. In one embodiment, the second segment of the non-reactive impact modifier is selected from the group consisting of polyolefins, polydienes, polyaromatics, and copolymers. An example of a polyaromatic second segment is polystyrene. An example of a copolymer second segment is styrene/butadiene copolymer.

The first and second segments of the non-reactive impact modifiers can be in a diblock, triblock, branched or comb structure. The molecular weight, weight average (Mw), of the non-reactive impact modifiers can range from about 300 to about 20,000 or from about 500 to about 10,000 or from about 1,000 to about 5,000. The segment ratio of the non-reactive impact modifiers can range from about 15 to about 85% polar first segments to about 15 to about 85% nonpolar second segments.

Examples of non-reactive impact modifiers include, but are not limited to, ethoxylated alcohols, ethoxylated alkylphenols, ethoxylated fatty acids, polyethylenevinyl acetate, block polymers of propylene oxide and ethylene oxide, ethylene/propylene terpolymers, functionalized polyolephins, polyglycerol esters, polysaccharide esters, and sorbitan esters. Examples of ethoxylated alcohols are C₁₁-C₁₅ secondary alcohol ethoxylates, polyoxyethylene cetyl ether, polyoxyethylene stearyl ether, and C₁₂-C₁₄ natural liner alcohol ethoxylated with ethylene oxide. C₁₁-C₁₅ secondary ethyoxylates can be obtained as Dow Tergitol^{®} 15S from the Dow Chemical Company. Polyoxyethlene cetyl ether and polyoxyethylene stearyl ether can be obtained from ICI Surfactants under the Brij^{®} series of products. C₁₂-C₁₄ natural linear alcohol ethoxylated with ethylene oxide can be obtained from Hoechst Celanese under the Genapol^{®} series of products. Examples of ethoxylated alkylphenols include octylphenoxy poly(ethyleneoxy)ethanol and nonylphenoxy poly(ethyleneoxy)ethanol. Octylphenoxy poly(ethyleneoxy)ethanol can be obtained as Igepal^{®} CA series of products from Rhodia, and nonylphenoxy poly(ethyleneoxy)ethanol can be obtained as Igepal CO series of products from Rhodia or as Tergitol^{®} NP from Dow Chemical Company. Ethyoxylated fatty acids can include polyethyleneglycol monostearate or monolaruate which can be obtained from Henkel under the Nopalcol^{®} series of products. Block polymers of propylene oxide and ethylene oxide can be obtained under the Pluronic^{®} series of products from BASF. Polyglycerol esters can be obtained from Stepan under the Drewpol^{®} series of products. Polysaccharide esters can be obtained from Henkel under the Glucopon^{®} series of products, which are alkyl polyglucosides. Sorbitan esters can be obtained from ICI under the Tween^{®} series of products.

In another embodiment, the non-reactive impact modifiers can be synthesized *in situ* in the cellulose ester composition by reacting cellulose ester-compatible compounds. These compounds can be, for example, telechelic oligomers, which are defined as prepolymers capable of entering into further polymerization or other reaction through their reactive end groups. In one embodiment, these *in situ* impact modifiers can have higher molecular weight, weight average (Mw), from about 10,000 to about 1,000,000.

In another embodiment, the impact modifier can be reactive. The reactive impact modifier can comprise a polymer or oligomer compatible with one component of the composition and functionality capable of reacting with another component of the composition. In embodiments, there are two types of reactive impact modifiers that can be used. The first reactive impact modifier has a hydrocarbon chain that is compatible with the cellulose ester and also has functionality capable of reacting with the cellulose ester. Such functional groups include, but are not limited to, carboxylic acids, anhydrides, acid chlorides, epoxides, and isocyanates. Specific examples of this type of reactive impact modifier include, but are not limited to: long chain fatty acids, such as, stearic acid (octadecanoic acid); long chain fatty acid chlorides, such as, stearoyl chloride (octadecanoyl chloride); long chain fatty acid anhydrides, such as, stearic anhydride (octadecanoic anhydride); epoxidized oils and fatty esters; styrene maleic anhydride copolymers; maleic anhydride grafted polypropylene; copolymers of maleic anhydride with olefins and/or acrylic esters, e.g. terpolymers of ethylene, acrylic ester and maleic anhydride; and copolymers of glycidyl methacrylate with olefins and/or acrylic esters, e.g. terpolymers of ethylene, acrylic ester, and glycidyl methacrylate.

Reactive impact modifiers can be obtained as SMA^{®} 3000 styrene maleic anhydride copolymer from Sartomer/Cray Valley, Eastman G-3015^{®} maleic anhydride grafted polypropylene from Eastman Chemical Company, Epolene^{®} E-43 maleic anhydride grafted polypropylene obtained from Westlake Chemical, Lotader^{®} MAH 8200 random terpolymer of ethylene, acrylic ester, and maleic anhydride obtained from Arkema, Lotader^{®} GMA AX 8900 random terpolymer of ethylene, acrylic ester, and glycidyl methacrylate, and Lotader^{®} GMA AX 8840 random terpolymer of ethylene, acrylic ester, and glycidyl methacrylate.

Reactive polyolefin impact modifiers can be obtained as Lotader, Fusabond, Elvaloy PTW, Lotryl, Elvaloy AC, InterLoy).

The second type of reactive impact modifier has a polar chain that is compatible with the cellulose ester and also has functionality capable of reacting with the cellulose ester. Examples of these types of reactive impact modifiers include cellulose esters or polyethylene glycols with olefin or thiol functionality. Reactive polyethylene glycol impact modifiers with olefin functionality include, but are not limited to, polyethylene glycol allyl ether and polyethylene glycol acrylate. An example of a reactive polyethylene glycol impact modifier with thiol functionality includes polyethylene glycol thiol. An example of a reactive cellulose ester impact modifier includes mercaptoacetate cellulose ester.

In embodiments, the amount of impact modifier in the cellulose ester composition can range from about 1 wt% to about 15 wt%, or from about 2 wt% to about 10 wt%, or from about 4 wt% to about 10 wt%, or from about 4 wt% to about 8 wt%, or from about 5 wt% to about 10 wt%, based on the weight of the cellulose ester composition.

### Frictional Additives

In embodiments, the frictional additive can be any material found to decrease the static and/or kinetic coefficient of friction of cellulose ester compositions compared to the base resin (i.e., composition without the frictional additive). In embodiments, the frictional additive can decrease the static and/or kinetic coefficient of friction of cellulose ester composition, while maintaining or without substantial decrease in physical properties of the base resin.

In embodiments, one or more frictional additives may be chosen from a broad range of waxes and siloxanes. Waxes useful in the cellulose ester compositions can include higher alkanes and lipids, which are lipophilic, malleable solids at room temperature (*i.e.,* 23°C). Natural waxes are found in plants and animals and also occur in petroleum products. In one embodiment, the waxes are mixtures of saturated alkanes, naphthenes, and alkyl and naphthene-substituted aromatic compounds. In another embodiment, the wax is a Montan wax, which is extracted from certain coal and lignite sources. In another embodiment, the wax can be a rice bran wax (RBW), e.g., RBW derived from crude rice bran, such as LICOCARE^{®} RBW Vita additives (from Clariant). In another embodiment, the wax can be a polyolefin wax. In some embodiments, naturally-occuring waxes can be used, such as beeswax, which is primarily myricyl palmitate, cetyl palmitate, lanolin, carnuba wax.

In embodiments, one or more frictional additives may comprise one or more siloxanes. Siloxanes are compounds comprising an Si-O-Si linkage. Examples include compounds having the structures H(OSiH2)nOH and (OSiH2)n. In other embodiments, the siloxanes are silicones or polysiloxanes having the structure (-RSi-O-SiR-), wherein R is an organic group such as an alkyl or aryl group. Examples of such polysiloxanes are polydimethylsiloxane or "PDMS" and polydiphenylsiloxane.

Commercially available examples of such waxes and siloxanes include Genioplast S, a pelletized silicone gum formulation from Wacker Chemie AG; Tegomer H-Si (e.g., H-Si 6441 P), a polyester modified siloxane from Evonik Industries AG; Dowsil^{™} Si powder resin modifier (e.g., DowSil 4-7081), from the Dow Chemical Company; and Loxiol P (e.g., P861), a polyol ester, which is available from Emery Oleochemicals GmbH.

In embodiments, the waxes and/or siloxanes utilized as the frictional additive component, can be present in an amount of about 0.1 to about 15, or about 0.1 to about 12, or about 0.1 to about 10, or about 0.1 to about 8, or about 0.1 to about 6, or about 0.1 to about 5, or about 0.1 to about 4, or about 0.1 to about 3, or about 0.1 to about 2, or about 0.1 to about 1, or about 0.2 to about 5, or about 0.2 to about 4, or about 0.2 to about 3, or about 0.2 to about 2, or about 0.2 to about 1, or about 0.3 to about 5, or about 0.3 to about 4, or about 0.3 to about 3, or about 0.3 to about 2, or about 0.3 to about 1.5, or about 0.4 to about 2, or about 0.4 to about 1.5, or about 0.5 to about 5, or about 0.5 to about 4, or about 0.5 to about 3, or about 0.5 to about 2, or about 0.5 to about 1.5, or about 0.5 to about 1, percent by weight of the cellulose ester composition.

In embodiments, the frictional additive component comprises one or more siloxanes that are present in amounts of about 0.1 to about 10, or about 0.1 to about 8, or about 0.1 to about 6, or about 0.1 to about 5, or about 0.1 to about 4, or about 0.1 to about 3, or about 0.1 to about 2, or about 0.1 to about 1, or about 0.2 to about 5, or about 0.2 to about 4, or about 0.2 to about 3, or about 0.2 to about 2, or about 0.2 to about 1, or about 0.3 to about 5, or about 0.3 to about 4, or about 0.3 to about 3, or about 0.3 to about 2, or about 0.3 to about 1.5, or about 0.4 to about 2, or about 0.4 to about 1.5, or about 0.5 to about 5, or about 0.5 to about 4, or about 0.5 to about 3, or about 0.5 to about 2, or about 0.5 to about 1.5, or about 0.5 to about 1, percent by weight of the cellulose ester composition.

### Plasticizers

In one embodiment, the composition can contain a plasticizer. The plasticizer utilized can be any that is known in the art that can reduce the glass transition temperature and/or the melt viscosity of the cellulose ester to improve melt processing characteristics. The plasticizer may be any plasticizer suitable for use with a cellulose ester. The plasticizer level should be lower than the normal (or typical) plasticizer level for cellulose esters; so that the compositions have higher Tg (or HDT) than fully plasticized cellulose ester compositions, good toughness and good flow. In embodiments, the plasticizer is present in an amount that does not substantially reduce the Tg (or HDT) of the cellulose ester composition compared to a similar composition without the plasticizer. In embodiments, the Tg (or HDT) does not change (e.g., reduce) more than 20%, or 15%, or 10%, or 5%, or 2%, as a result of including the plasticizer.

The plasticizer can be either monomeric or polymeric in structure. In one embodiment, the plasticizer is at least one selected from the group consisting of an aromatic phosphate ester plasticizer, alkyl phosphate ester plasticizer, dialkylether diester plasticizer, tricarboxylic ester plasticizer, polymeric polyester plasticizer, polyglycol diester plasticizer, polyester resin plasticizer, aromatic diester plasticizer, aromatic trimester plasticizer, aliphatic diester plasticizer, carbonate plasticizer, epoxidized ester plasticizer, epoxidized oil plasticizer, benzoate plasticizer, polyol benzoate plasticizer adipate plasticizer, a phthalate plasticizer, a glycolic acid ester plasticizer, a citric acid ester plasticizer, a hydroxyl-functional plasticizer, or a solid, non-crystalline resin plasticizer.

In one embodiment, the plasticizer can be selected from at least one of the following: triphenyl phosphate, tricresyl phosphate, cresyldiphenyl phosphate, octyldiphenyl phosphate, diphenylbiphenyl phosphate, trioctyl phosphate, tributyl phosphate, diethyl phthalate, dimethoxyethyl phthalate, dimethyl phthalate, dioctyl phthalate, dibutyl phthalate, di-2-ethylhexyl phthalate, butylbenzyl phthalate, dibenzyl phthalate, butyl phthalyl butyl glycolate, ethyl phthalyl ethyl glycolate, methyl phthalyl ethyl glycolate, triethyl citrate, tri-n-butyl citrate, acetyltriethyl citrate, acetyl-tri-n-butyl citrate, and acetyl- tri-n-(2-ethylhexyl) citrate, diethylene glycol dibenzoate, dipropylene glycol dibenozoate, or triethylene glycol dibenzoate.

In another embodiment, the plasticizer can be selected from at least one of the following: esters comprising: (i) acid residues comprising one or more residues of: phthalic acid, adipic acid, trimellitic acid, succinic acid, benzoic acid, azelaic acid, terephthalic acid, isophthalic acid, butyric acid, glutaric acid, citric acid or phosphoric acid; and (ii) alcohol residues comprising one or more residues of an aliphatic, cycloaliphatic, or aromatic alcohol containing up to about 20 carbon atoms.

In another embodiment, the plasticizer can be selected from at least one of the following: esters comprising: (i) at least one acid residue selected from the group consisting of phthalic acid, adipic acid, trimellitic acid, succinic acid, benzoic acid, azelaic acid, terephthalic acid, isophthalic acid, butyric acid, glutaric acid, citric acid and phosphoric acid; and (ii) at least one alcohol residue selected from the group consisting of aliphatic, cycloaliphatic, and aromatic alcohol containing up to about 20 carbon atoms.

In another embodiment, the plasticizer can comprise alcohol residues where the alcohol residues are at least one selected from the following: stearyl alcohol, lauryl alcohol, phenol, benzyl alcohol, hydroquinone, catechol, resorcinol, ethylene glycol, neopentyl glycol, 1,4-cyclohexanedimethanol, and diethylene glycol.

In another embodiment, the plasticizer can be selected from at least one of the following: benzoates, phthalates, phosphates, arylene-bis(diaryl phosphate), and isophthalates. In another embodiment, the plasticizer comprises diethylene glycol dibenzoate, abbreviated herein as "DEGDB".

In another embodiment, the plasticizer can be selected from at least one of the following: aliphatic polyesters comprising C₂₋₁₀ diacid residues, for example, malonic acid, succinic acid, glutaric acid, adipic acid, pimelic acid, suberic acid, azelaic acid, and sebacic acid; and C₂₋₁₀ diol residues.

In another embodiment, the plasticizer can comprise diol residues which can be residues of at least one of the following C₂-C₁₀ diols: ethylene glycol, diethylene glycol, 1,2-propylene glycol, 1,3-propylene glycol, 1,2-butylene glycol, 1,3-butylene glycol, 1,4-butylene glycol, neopentyl glycol, 1,5-pentanediol, 1,6 hexanediol, 1,5-pentylene glycol, triethylene glycol, and tetraethylene glycol.

In another embodiment, the plasticizer can include polyglycols, such as, for example, polyethylene glycol, polypropylene glycol, and polybutylene glycol. These can range from low molecular weight dimers and trimers to high molecular weight oligomers and polymers. In one embodiment, the molecular weight of the polyglycol can range from about 200 to about 2000.

In another embodiment, the plasticizer comprises at least one of the following: Resoflex^{®} R296 plasticizer, Resoflex^{®} 804 plasticizer, SHP (sorbitol hexapropionate), XPP(xylitol pentapropionate), XPA(xylitol pentaacetate), GPP(glucose pentaacetate), GPA (glucose pentapropionate) and APP (arabitol pentapropionate).

In another embodiment, the plasticizer comprises one or more of: A) from about 5 to about 95 weight % of a C₂-C₁₂ carbohydrate organic ester, wherein the carbohydrate comprises from about 1 to about 3 monosaccharide units; and B) from about 5 to about 95 weight % of a C₂-C₁₂ polyol ester, wherein the polyol is derived from a C₅ or C₆ carbohydrate. In one embodiment, the polyol ester does not comprise or contain a polyol acetate or polyol acetates.

In another embodiment, the plasticizer comprises at least one carbohydrate ester and the carbohydrate portion of the carbohydrate ester is derived from one or more compounds selected from the group consisting of glucose, galactose, mannose, xylose, arabinose, lactose, fructose, sorbose, sucrose, cellobiose, cellotriose and raffinose.

In another embodiment, the plasticizer comprises at least one carbohydrate ester and the carbohydrate portion of the carbohydrate ester comprises one or more of α-glucose pentaacetate, β-glucose pentaacetate, α - glucose pentapropionate, β-glucose pentapropionate, α-glucose pentabutyrate and β-glucose pentabutyrate.

In another embodiment, the plasticizer comprises at least one carbohydrate ester and the carbohydrate portion of the carbohydrate ester comprises an α-anomer, a β-anomer or a mixture thereof.

In another embodiment, the plasticizer can be selected from at least one of the following: propylene glycol dibenzoate, glyceryl tribenzoate, diethylene glycol dibenzoate, triethylene glycol dibenzoate, di propylene glycol dibenzoate, and polyethylene glycol dibenzoate.

In another embodiment, the plasticizer can be a solid, non-crystalline resin. These resins can contain some amount of aromatic or polar functionality and can lower the melt viscosity of the cellulose esters. In one embodiment, the plasticizer can be a solid, non-crystalline compound (resin), such as, for example, rosin; hydrogenated rosin; stabilized rosin, and their monofunctional alcohol esters or polyol esters; a modified rosin including, but not limited to, maleic- and phenol-modified rosins and their esters; terpene resins; phenol-modified terpene resins; coumarin-indene resins; phenolic resins; alkylphenol-acetylene resins; and phenol-formaldehyde resins.

In another embodiment, the plasticizer is at least one plasticizer selected from the group consisting of: triacetin, trimethyl phosphate, triethyl phosphate, tributyl phosphate, triphenyl phosphate, triethyl citrate, acetyl trimethyl citrate, acetyl triethyl citrate, acetyl tributyl citrate, tributyl-o-acetyl citrate, dibutyl phthalate, diaryl phthalate, diethyl phthalate, dimethyl phthalate, di-2-methoxyethyl phthalate, di-octyl phthalate, di-octyl adipate, dibutyl tartrate, ethyl o-benzoylbenzoate, ethyl phthalyl ethyl glycolate, methyl phthalyl ethyl glycolate, n-ethyltoluenesulfonamide, o-cresyl p-toluenesulfonate, aromatic diol, substituted aromatic diols, aromatic ethers, tripropionin, tribenzoin, polycaprolactone, glycerin, glycerin esters, diacetin, glycerol acetate benzoate, polyethylene glycol, polyethylene glycol esters, polyethylene glycol diesters, di-2-ethylhexyl polyethylene glycol ester, triethylene glycol bis-2-ethyl hexanoate, glycerol esters, diethylene glycol, polypropylene glycol, polyglycoldiglycidyl ethers, dimethyl sulfoxide, N-methyl pyrollidinone, C1-C20 dicarboxylic acid esters, dimethyl adipate, di-butyl maleate, di-octyl maleate, resorcinol monoacetate, catechol, catechol esters, phenols, epoxidized soy bean oil, castor oil, linseed oil, epoxidized linseed oil, other vegetable oils, other seed oils, difunctional glycidyl ether based on polyethylene glycol, γ-valerolactone, alkylphosphate esters, aryl phosphate esters, phospholipids, eugenol, cinnamyl alcohol, camphor, methoxy hydroxy acetophenone, vanillin, ethylvanillin, 2-phenoxyethanol, glycol ethers, glycol esters, glycol ester ethers, polyglycol ethers, polyglycol esters, ethylene glycol ethers, propylene glycol ethers, ethylene glycol esters, propylene glycol esters, polypropylene glycol esters, acetylsalicylic acid, acetaminophen, naproxen, imidazole, triethanol amine, benzoic acid, benzyl benzoate, salicylic acid, 4-hydroxybenzoic acid, propyl-4-hydroxybenzoate, methyl-4-hydroxybenzoate, ethyl-4-hydroxybenzoate, benzyl-4-hydroxybenzoate, diethylene glycol dibenzoate, dipropylene glycol dibenozoate, triethylene glycol dibenzoate, butylated hydroxytoluene, butylated hydroxyanisol, sorbitol, xylitol, ethylene diamine, piperidine, piperazine, hexamethylene diamine, triazine, triazole, pyrrole, and any combination thereof.

In embodiments, the amount of plasticizer in the cellulose ester composition can range from 0 to about 15 weight percent based on the weight of the cellulose ester composition. In one embodiment, the amount can range up to about 15 weight percent based on the weight of the cellulose ester composition. In another embodiment, the amount can range up to about 10 weight percent based on the weight of the cellulose ester composition. In another embodiment, the amount can range up to about 5 weight percent based on the weight of the cellulose ester composition, or up to about 3 weight percent based on the weight of the cellulose ester composition, or less than 2 weight percent based on the weight of the cellulose ester composition. In embodiments, the cellulose ester composition comprises a cellulose ester that is CA and contains plasticizer as discussed herein, e.g., contains plasticizer in an amount in a range from 1 to 15 wt%, or 1 to 10 wt%, or 1 to 8 wt%, or 2 to 15 wt%, or 2 to 10 wt%, or 2 to 8 wt%, or 2 to 6 wt%, or 2 to 5 wt%, or 3 to 15 wt%, or 3 to 10 wt%, or 3 to 8 wt%, or 3 to 6 wt%, based on the total weight of the composition.

In another embodiment, the cellulose ester composition contains no plasticizer. In one embodiment, the cellulose ester composition comprises a cellulose ester that is CAP and no plasticizer. In one embodiment, the cellulose ester composition comprises a cellulose ester that is CAB and no plasticizer.

### Specific Cellulose Ester Composition Embodiments

In certain embodiments, the cellulose ester composition comprises 75 to 98 wt%, or about 80 to 98 wt%, of at least one cellulose ester, in one embodiment CAP; 1 to 15 wt%, or 1 to 10 wt%, of at least one impact modifier, in one embodiment an acrylic core-shell impact modifier; and 0.1 to 10 wt%, or 0.2 to 5 wt% of at least one frictional additive. In embodiments, the frictional additive comprises or is a siloxane frictional additive.

In certain embodiments, the cellulose ester composition comprises 55 to 98 wt%, or about 77 to 98 wt%, of at least one cellulose ester, in one embodiment CAP; 1 to 15 wt%, or 1 to 10 wt%, of at least one impact modifier, in one embodiment an acrylic core-shell impact modifier; 1 to 30 wt%, or 1 to 20 wt%, or 1 to 10 wt%, of at least one PAP, in one embodiment a PBS having an MFR (190°C, 2.16 kg) less than 25 and Elongation at Break of 100% or greater; and 0.1 to 10 wt%, or 0.2 to 5 wt% of at least one frictional additive, e.g., a siloxane frictional additive. In embodiments, the CAP contains greater than 10%, or greater than 20%, or greater than 30%, or greater than 40%, or greater than 45%, by weight propionyl.

In one embodiment, the cellulose ester composition is transparent, with light transmission of at least 70%, or at least 75%, or at least 80%, or at least 85%, or at least 90%, measured according to ASTM D1003 using a 3.2 mm plaque after injection molding at a barrel set point of 249°C and a residence time of 5 min. In certain embodiments, the polymer-based resin has transmission in the range from 70% to 95%, or 75% to 95%, or 80% to 95%, or 85% to 95%, or 90% to 95%, or 70% to 90%, or 75% to 90%, or 80% to 90%, or 85% to 90%, measured according to ASTM D1003 using a 3.2 mm plaque after injection molding at a barrel set point of 249°C and a residence time of 5 min. In one class of this embodiment, the cellulose ester composition comprising the PAP, e.g., PBS, impact modifier, e.g., acrylic core-shell impact modifier, and frictional additive has a percent haze of less than 10%. In embodiments, the cellulose ester composition comprising the PAP, impact modifier and frictional additive has a percent haze of less than 8%, or less than 6%, or less than 5%.

In another embodiment, the refractive index (RI) of the PAP and the impact modifier are each sufficiently close to that of the cellulose ester(s) to provide a composition with high transmission and low haze. In one embodiment, the PAP, impact modifier and frictional additive each has a RI that is close to the RI of the cellulose ester of about 1.46-1.48 to provide clear compositions. In embodiments, the PAP, impact modifier and frictional additive each individually relative to the cellulose ester components have a difference in refractive index, RI(second component)-RI(first component) (e.g., RI of CE - RI of PBS), of about 0.006 to about -0.0006, and the blend has a percent transmittance of at least 75%, and a haze of 10% or less, and more preferably 5% or less.

In embodiments, the amount of PAP, e.g., PBS, in the cellulose ester composition can range from about 0.5 wt% to about 40 wt%, or from about 1 wt% to about 35 wt%, or 2 to 30 wt%, or 2 to 20 wt%, or 2 to 10 wt%, or from about 2.5 wt% to about 30 wt%, or from about 5 wt% to about 25 wt%, or from about 5 wt% to about 20 wt%, or from about 5 wt% to about 15 wt%, or from about 5 wt% to about 10 wt%, or from about 10 wt% to about 30 wt%, or from about 10 wt% to about 25 wt%, or from about 10 wt% to about 20 wt%, or from about 10 wt% to about 15 wt%, or from greater than 10 wt% to about 30 wt%, or from greater than 10 wt% to about 25 wt%, or from greater than 10 wt% to about 20 wt%, or from greater than 10 wt% to about 15 wt%, based on the weight of the cellulose ester composition. In embodiments, the composition contains in addition to the at least one impact modifier, at least one frictional additive, and optionally at least one monomeric plasticizer, at least one PAP in an amount from 0.5 to 40 wt%, or 1 to 35 wt%, or 2 to 30 wt%, or 2 to 20 wt%, or 2 to 10 wt%, or 3 to 10 wt%, or 3 to 8 wt%, or 3 to 7 wt%, or 4 to 8 wt%; or 4 to 7 wt%, based on the total cellulose ester composition.

In another embodiment, the cellulose ester compositions further comprise at least one additional polymeric component as a blend (with the cellulose ester) in an amount from 5 to 95 weight %, based on the total cellulose ester composition. Suitable examples of the additional polymeric component include, but are not limited to, nylon; polyesters; polyamides; polystyrene; other cellulose esters, cellulose ethers; polystyrene copolymers; styrene acrylonitrile copolymers; polyolefins; polyurethanes; acrylonitrilebutadiene styrene copolymers; poly(methylmethacrylate); acrylic copolymers; poly(ether-imides); polyphenylene oxides; polyvinylchloride; polyphenylene sulfides; polyphenylene sulfide/sulfones; poly(ester-carbonates); polycarbonates; polysulfones; poly lactic acid; polysulfone ethers; and poly(ether-ketones) of aromatic dihydroxy compounds; or mixtures of any of the foregoing polymers. The blends can be prepared by conventional processing techniques known in the art, such as melt blending or solution blending. In certain embodiments, the total amount of additional polymeric compounds (not including the PAP) is less than 25 wt%, or less than 20 wt%, or less than 15 wt%, or less than 10 wt%, or less than 5 wt%, or none, based on the total weight of the cellulose ester composition.

In another embodiment, the composition is melt processable. Melt processbility generally refers to the ability to thermally process the materials below their degradation temperature to obtain homogeneous pellets or plastic articles. For example, the compositions described can be melt extruded on a Werner & Pflerderer 30 mm twin screw extruder at a throughput of 35 lbs/hour with screw speed of 250 rpm and barrel temperature of 240°C. injection molded on a Toyo 110 injection molding machine with barrel temperature of 240°C and mold temperature of 160°F with minimal molecular weight or color degradation.

In one embodiment, a melt processable cellulose ester composition is provided comprising 1 to 30 wt%, or 1 to 15 wt%, or 2 to10 wt% of impact modifiers and no plasticizer, the cellulose ester composition having an HDT value of greater than 85°C, and notched Izod impact strength value of greater than 80 J/m (measured according to ASTM D256 on 3.2mm thick bars at 23°C), and spiral flow values of at least 15 inches at 240°C when measured using the procedure described herein. In one embodiment, the cellulose ester composition has a Tg value measured at 20°C /min according to ASTM D3418 of greater than 120°C. Unless specified otherwise, Notched Izod Impact Strength was performed on molded bars after notching according to ASTM Method D256 after conditioning at 23°C and 50% RH for 48 hours, on 3.2mm thick bars at 23°C.

In another embodiment, the compositions have a melt viscosity at 240°C and 400 rad/s of 10,000 P or below measured by a plate-plate melt rheometer such as a Rheometrics Dynamic Analyzer (RDA II) with 25 mm diameter parallel plates, 1 mm gap and 10% strain measured in accordance with ASTM D4440 using frequency scan of between 1 rad/sec and 400 rad/sec.

In one embodiment, the melt processable cellulose ester compositions comprise 1 to 30 wt%, or 1 to 15 wt% of impact modifiers, 0 to 15 wt% of plasticizers, and have a Tg greater than 90°C. In another embodiment, the melt processable cellulose ester compositions comprise 1 to 30 wt%, or 1 to 15 wt% of impact modifiers, 0 to 10 wt% of plasticizers, and have a Tg greater than 100°C. In yet another embodiment, melt processable cellulose ester compositions comprise 1 to 10 wt% of impact modifiers, 0 to 10 wt% of plasticizers, and have a Tg greater than 100°C. In another embodiment, melt processable cellulose ester compositions comprise 1 to 10 wt% of impact modifiers, 0 to 5 wt% of plasticizers, and have a Tg greater than 115°C.

In one embodiment, the melt processable cellulose ester compositions comprise 1 to 30 wt%, or 1 to 15 wt% of impact modifiers, 1 to 20 wt%, or 1 to 15 wt% of PAPs, 0 to 15 wt% of plasticizers, and have a Tg greater than 90°C. In another embodiment, the melt processable cellulose ester compositions comprise 1 to 30 wt%, or 1 to 15 wt% of impact modifiers, 1 to 20 wt%, or 1 to 15 wt% of PAPs, 0 to 10 wt% of plasticizers, and have a Tg greater than 100°C. In yet another embodiment, melt processable cellulose ester compositions comprise 1 to 10 wt% of impact modifiers, 1 to 15 wt% of PAPs, 0 to 10 wt% of plasticizers, and have a Tg greater than 100°C. In another embodiment, melt processable cellulose ester compositions comprise 1 to 10 wt% of impact modifiers, 1 to 10 wt% of PAPs, 0 to 5 wt% of plasticizers, and have a Tg greater than 115°C.

In another embodiment, the cellulose ester compositions have a Tg or HDT similar to that of the base cellulose ester polymer with a drop of only a few degrees Celsius (e.g., less than 5°C, or less than 2°C) with the incorporation of an impact modifier and no plasticizer. Impact properties of these composition can also exceed 80 J/m (notched Izod impact strength at 23°C).

In embodiments, the cellulose ester composition has a HDT greater than 80°C, or greater than 85°C, according to ASTM D648 as measured at 1.82 MPa using a 3.2 mm thick bar that was subjected to 70°C for 4 hours. In certain embodiments, the polymer-based resin has a HDT at 0.455 MPa of at least 85°C, at least 90°C, or at least 95°C. In certain embodiments, the cellulose ester composition has a HDT in the range from 85°C to 140°C, 85°C to 130°C, 85°C to 120°C, 85°C to 110°C, 85°C to 105°C, 85°C to 100°C, 85°C to 95°C, 90°C to 140°C, 90°C to 130°C, 90°C to 120°C, 90°C to 110°C, 90°C to 105°C, 90°C to 100°C, 95°C to 140°C, 95°C to 130°C, 95°C to 120°C, 95°C to 110°C, 95°C to 105°C, 95°C to 100°C.

In embodiments, the polymer-based resin has a notched izod impact strength of at least 80 J/m, or at least 90 J/m, or at least 100 J/m, or at least 110 J/m, or at least 120 J/m, or at least 130 J/m, or at least 140 J/m, or at least 150 J/m, or at least 160 J/m, or at least 170 J/m, or at least 180 J/m, or at least 190 J/m, or at least 200 J/m, as measured according to ASTM D256 using a 3.2 mm thick bar that has been subjected to 50% relative humidity for 48 hours at 23°C. In certain embodiments, the polymer-based resin has a notched izod impact strength in the range of from about 80 J/m to about 500 J/m, from about 80 J/m to about 400 J/m, from about 80 J/m to about 300 J/m, from about 80 J/m to about 200 J/m, from about 100 J/m to about 500 J/m, from about 100 J/m to about 400 J/m, from about 100 J/m to about 300 J/m, from about 100 J/m to about 200 J/m, from about 120 J/m to about 500 J/m, from about 120 J/m to about 400 J/m, from about 120 J/m to about 300 J/m, from about 120 J/m to about 200 J/m, from about 150 J/m to about 500 J/m, from about 150 J/m to about 400 J/m, from about 150 J/m to about 300 J/m, from about 150 J/m to about 200 J/m, from about 170 J/m to about 500 J/m, from about 170 J/m to about 400 J/m, from about 170 J/m to about 300 J/m, from about 170 J/m to about 200 J/m, from about 180 J/m to about 500 J/m, from about 180 J/m to about 400 J/m, from about 180 J/m to about 300 J/m, from about 180 J/m to about 200 J/m, from about 190 J/m to about 500 J/m, from about 190 J/m to about 400 J/m, from about 190 J/m to about 300 J/m, from about 190 J/m to about 200 J/m, from about 200 J/m to about 500 J/m, from about 200 J/m to about 400 J/m, or from about 200 J/m to about 300 J/m, as measured according to ASTM D256 using a 3.2 mm thick bar that has been subjected to 50% relative humidity for 48 hours at 23°C.

In embodiments, the polymer-based resin has a flexural modulus of greater than 1800 MPa as measured according to ASTM D790 using a 3.2 mm thick bar that has been subjected to 50% relative humidity for 48 hours at 23°C. In certain embodiments, the polymer-based resin has a flexural modulus of at least 1900 MPa, at least 2000 MPa, at least 2100 MPa, at least 2200 MPa, at least 2300MPa, or at least 2400 MPa, as measured according to ASTM D790 using a 3.2 mm thick bar that has been subjected to 50% relative humidity for 48 hours at 23°C. In certain embodiments, the polymer-based resin has a flexural modulus in the range of from about 1800 to about 3500 MPa, from about 1900 to about 3500 MPa, from about 2000 to about 3500 MPa, from about 2100 to about 3500 MPa, from about 2200 to about 3500 MPa, from about 2300 to about 3500 MPa, from about 2400 to about 3500 MPa, or from about 2500 to about 3500 MPa. as measured according to ASTM D790 using a 3.2 mm thick bar that has been subjected to 50% relative humidity for 48 hours at 23°C. In certain embodiments, the polymer-based resin has a flexural modulus in the range of from about 1900 to about 2500 MPa, from about 1900 to about 2800 MPa, or from about 1900 to about 3000 MPa, as measured according to ASTM D790 using a 3.2 mm thick bar that has been subjected to 50% relative humidity for 48 hours at 23°C.

In certain embodiments, the cellulose ester compositions contain 1 wt% - 30 wt%, or 2 wt% - 15 wt% impact modifier, based on the total weight of the cellulose ester composition, and have HDT values greater than 85°C, or 90°C, and notched Izod impact strength values greater than 80, or 100, or 120 J/m, and viscosities at 240°C and 400 rad/sec less than 10,000 P.

In certain embodiments, the cellulose ester compositions contain 1 wt% - 30 wt%, or 2 wt% - 15 wt% impact modifier, based on the total weight of the cellulose ester composition, and have HDT values greater than 85°C, or 90°C, and notched Izod impact strength values greater than 80, or 100, or 120 J/m, and a light transmission value greater than 70%, or at least 75%, or at least 80%, or at least 85%, or at least 90%, measured according to ASTM D1003 using a 3.2 mm plaque after injection molding at a barrel set point of 249°C and a residence time of 5 min.

In certain embodiments, the cellulose ester compositions contain 1 wt% - 30 wt%, or 2 wt% - 15 wt% impact modifier, based on the total weight of the cellulose ester composition, and have HDT values greater than 85°C, or 90°C, and notched Izod impact strength values greater than 80, or 100, or 120 J/m, and do not squeak or have screw recovery issues during injection molding at a barrel set point of 249°C.

In certain embodiments, the cellulose ester compositions contain 1 wt% - 30 wt%, or 2 wt% - 15 wt% acrylic core-shell impact modifier, based on the total weight of the cellulose ester composition, and have HDT values greater than 85°C, or 90°C, notched Izod impact strength values greater than 150 J/m, and do not squeak or have screw recovery issues during injection molding at a barrel set point of 249°C.

In another embodiment, the cellulose ester compositions further comprise at least one additive selected from the group comprising antioxidants, thermal stabilizers, mold release agents, antistatic agents, whitening agents, colorants, flow aids, processing aids, plasticizers, anti-fog additives, minerals, UV stabilizers, lubricants, chain extenders, nucleating agents, reinforcing fillers, wood or flour fillers, glass fiber, carbon fiber, flame retardants, dyes, pigments, colorants, additional resins and combinations thereof.

In embodiments, reinforcing materials may be useful in the compositions. The reinforcing materials may include, but are not limited to, carbon filaments, silicates, mica, clay, talc, titanium dioxide, Wollastonite, glass flakes, glass beads and fibers, and polymeric fibers and combinations thereof. In one embodiment, the reinforcing materials are glass, such as, fibrous glass filaments, mixtures of glass and talc, glass and mica, and glass and polymeric fibers.

In certain embodiments, in addition to the impact modifier and frictional additive, and optionally monomeric plasticizer and/or PAP (as discussed herein), the cellulose ester composition includes stabilizers selected from the group consisting of secondary antioxidants, acid scavengers, or a combination thereof. In certain embodiments, in addition to the impact modifier and frictional additive, and optionally monomeric plasticizer and/or PAP (as discussed herein), the cellulose ester composition includes a secondary antioxidant in the range from about 0.01 to about 0.8 wt%, or about 0.05 to about 0.5 wt%, or about 0.08 to about 0.4 wt%, or about 0.1 to about 0.3 wt%, based on the total weight of the composition. In certain embodiments, in addition to the impact modifier and frictional additive, and optionally monomeric plasticizer and/or PAP (as discussed herein), the cellulose ester composition includes an acid scavenger in the range from about 0.2 to about 5 wt %, or about 0.5 to about 4 wt%, or about 0.5 to about 3 wt%, or about 0.75 to about 3.5 wt%, or about 1 to about 3 wt%, or about 1 to about 2 wt%, or about 1.5 to about 2.5 wt%, based on the total weight of the composition. In one embodiment, in addition to the impact modifier and frictional additive, and optionally monomeric plasticizer and/or PAP (as discussed herein), the cellulose ester composition includes a secondary antioxidant in the range from about 0.01 to about 0.8 wt%, or about 0.05 to about 0.5 wt%, or about 0.08 to about 0.4 wt%, or about 0.1 to about 0.3 wt%, and an acid scavenger in the range from about 0.2 to about 5 wt %, or about 0.5 to about 4 wt%, or about 0.5 to about 3 wt%, or about 0.75 to about 3.5 wt%, or about 1 to about 3 wt%, or about 1 to about 2 wt%, or 1.5 to about 2.5 wt%, based on the total weight of the composition. In embodiments, the weight ratio of the acid scavenger to the secondary antioxidant is in the range from 4:1 to 25:1, or from 5:1 to 20:1, or 6:1 to 18:1, or 7:1 to 15:1, or 8:1 to 15:1, or 9:1 to 15:1, or 10:1 to 15:1, or 9:1 to 14:1, or 9:1 to 13:1, or 9:1 to 12:1, or 10:1 to 14:1, or 10:1 to 13:1, or 10:1 to 12:1.

In embodiments, the secondary antioxidant is a pentaerythiritol diphosphite compound having a melting point of 200°C or less, or 190°C or less, or 180°C or less. In embodiments, the secondary antioxidant is a Bis(dialkyl phenyl) pentaerythiritol diphosphite. In one embodiment, the secondary antioxidant is 3,9-bis(2,4-di-tert-butylphenoxy)-2,4,8,10-tetraoxa-3,9-diphosphaspiro[5.5]undecane. In one embodiment, the acid scavenger is an epoxidized fatty acid ester, e.g., epoxidized soybean oil. In one embodiment, the cellulose ester composition further includes a salt stabilizer, for example in the range from about 0.1 to about 0.5 wt % based on the total weight of the composition. In one embodiment, other than the cellulose ester, impact modifier, frictional additive, and optionally monomeric plasticizer and/or PAP and/or stabilizers (as discussed herein), the cellulose ester composition contains a total of less than 5 wt%, or less than 2 wt %, or less than 1 wt%, or less than 0.5 wt%, of any other components, based on the total weight of the composition. It should be noted that an additive/component may serve more than one function in the cellulose ester composition. The different (or specific) functionality of any particular additive (or component) to the cellulose ester composition can be dependent on its physical properties (e.g., molecular weight, solubility, melt temperature, Tg, etc.) and/or the amount of such additive/component in the overall composition. For example, epoxidized oil, e.g., epoxidized soybean oil, can function as a plasticizer in one form (e.g., at one molecular weight, number of reactive groups, or wt% in the composition) or as an acid scavenger (with little or no plasticizing effect) at another molecular weight, number of reactive groups or weight percent in the composition.

In certain embodiments, the cellulose ester composition contains no maleic anhydride modified EVA. In certain embodiments, the cellulose ester composition contains no polyether ester compounds. In certain embodiments, the cellulose ester composition contains no adipic acid compounds. In certain embodiments, the cellulose ester composition comprises 60-99 wt% of one or more cellulose esters, 1-30 wt% of one or more impact modifiers, 0.1 to 10 wt% of a frictional additive component, and less than 5 wt% total of other components, based on the total weight of the cellulose ester composition. In certain embodiments, such other components do not include plasticizers, polyether ester compounds or adipic acid compounds. In certain embodiments, the cellulose ester composition contains dioctyl adipate (DOA) plasticizer and no other adipic acid compounds.

In another embodiment, a process for producing a cellulose ester composition is provided. The process comprises combining at least one cellulose ester, at least one impact modifier, a frictional additive component, and optionally at least one plasticizer and/or PAP and/or stabilizer. The cellulose ester, impact modifiers, frictional additive component, plasticizer, PAP and stabilizers were previously discussed in this disclosure. In one embodiment, the cellulose ester and other components can be mixed in any order of addition.

In another embodiment, a process for producing a cellulose ester composition is provided comprising: a) mixing at least one impact modifier, at least one cellulose ester, a frictional additive component, and optionally at least one plasticizer and/or PAP and/or stabilizers for a sufficient time and temperature to disperse the components, including the impact modifier, to produce the cellulose ester composition. A sufficient temperature is defined as the flow temperature of the cellulose ester which is generally about 50°C above the Tg of the cellulose ester. In another embodiment, the temperature is about 80°C above the Tg of the cellulose ester. In embodiments, the temperature at mixing is limited at the upper range by the processing temperature of the impact modifier and at the lower range by the highest use temperature of the cellulose ester composition.

The efficiency of mixing two or more viscoelastic materials can depend on the ratio of the viscosities of the viscoelastic materials. In an embodiment, for a given mixing equipment and shear rate range, the viscosity ratio of the dispersed phase (including the impact modifier) and continuous phase (cellulose ester) should be within specified limits for obtaining adequate particle size.

In embodiments, mixing of the impact modifiers, cellulose esters, frictional additives, and any other additives can be accomplished by any method known in the art that is adequate to disperse the additives into the cellulose esters. Examples of mixing equipment include, but are not limited to, Banbury mixers, Brabender mixers, roll mills, and extruders (single or twin screw). The shear energy during the mixing is dependent on the combination of equipment, blade design, rotation speed (rpm), and mixing time. The shear energy should be sufficient to disperse the impact modifier (and other dispersed phase components, if present) throughout the cellulose ester.

In embodiments, the cellulose ester, impact modifier, frictional additives, plasticizer and other additives can be combined in any order during the process. In one embodiment, the cellulose ester is premixed with the impact modifier and/or the plasticizer. The cellulose ester containing the impact modifier and/or the plasticizer is then mixed with the other additives. In another embodiment, when reactive impact modifiers are utilized, the reactive impact modifiers can be mixed with the cellulose esters first, and then the other components are added.

The compositions can be useful as molded plastic articles or parts (or as solid plastic objects). The compositions are suitable for use in any applications where rigid plastics are required. Examples of such parts include disposable knives, forks, spoons, plates, cups, straws as well as eyeglass frames, toothbrush handles, toys, automotive trim, tool handles, camera parts, parts of electronic devices, razor parts, ink pen barrels, disposable syringes, bottles, and the like. In one embodiment, the compositions can be useful as plastics, films, fibers, and sheets. In one embodiment the compositions are useful as plastics to make bottles, bottle caps, eyeglass frames, cutlery, disposable cutlery, cutlery handles, shelving, shelving dividers, electronics housing, electronic equipment cases, computer monitors, printers, keyboards, pipes, automotive parts, automotive interior parts, automotive trim, signs, thermoformed letters, siding, toys, thermally conductive plastics, ophthalmic lenses, tools, tool handles, utensils, or hard trims for apparel (such as snaps, buckles, buttons or zippers). In another embodiment, the compositions can be suitable for use as films, sheeting, fibers, molded articles, medical devices, packaging, bottles, bottle caps, eyeglass frames, cutlery, disposable cutlery, cutlery handles, shelving, shelving dividers, furniture components, electronics housing, electronic equipment cases, computer monitors, printers, keyboards, pipes, toothbrush handles, automotive parts, automotive interior parts, automotive trim, signs, outdoor signs, skylights, multiwall film, thermoformed letters, siding, toys, toy parts, thermally conductive plastics, ophthalmic lenses and frames, tools, tool handles, and utensils, healthcare supplies, commercial foodservice products, boxes, film for graphic arts applications, and plastic film for plastic glass laminates. In embodiments, the articles can be an acoustic article, e.g., an article chosen from integrated audio devices, including speakers in automobiles, televisions, and smartphones; standalone speakers (wired or wireless), home theater systems, including sound bars, subwoofers, and under television; smart speakers, including WiFi streaming, and virtual personal assistants; and headphones, earbuds, and other wearable speakers. In embodiments, the acoustic article can also be a component or part of any of these devices, such as a housing, enclosure, speaker component, microphone component, headband, wristband, clip, handle, etc.

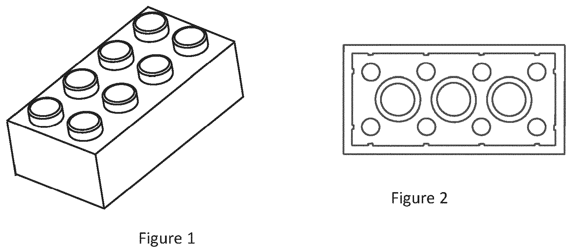

The compositions are also useful in forming injection molded toys. In particular, the composition is useful in forming injection molded construction toys or components thereof. The term "construction toy" as used herein includes the traditional toy building elements in the form of box-shaped building bricks provided with knobs on the upper side and complementary tubes on the lower side. A traditional box-shaped toy building brick is shown in Figures 1 and 2. The traditional box-shaped toy building bricks were disclosed for the first time in US 3,005,282 and are widely sold under the tradenames LEGO^{®} and LEGO^{®} DUPLO^{®}. The term also includes other similar box-shaped building bricks, which are produced by other companies than The LEGO Group and therefore sold under other trademarks than the trademark LEGO.

The term "construction toy" also includes other kinds of toy building elements provided with knobs on the upper side and/or complementary tubes on the lower side that may form part of a toy building set which typically comprises a plurality of building elements that are compatible with and hence can be interconnected with each other. Such toy building sets are also sold under the trademark LEGO, such as for example LEGO^{®} bricks, LEGO^{®} Technic and LEGO^{®} DUPLO^{®}. Some of these toy building sets includes toy building figures, such as for example LEGO^{®} Minifigures (see for example US 05/877,800), having complementary tubes on the lower side (see Fig. 2) so that the element can be connected to other toy building elements in the toy building set. Such toy building figures are also encompassed by the term "toy building element". The term also includes similar toy building elements, which are produced by other companies than The LEGO Group and therefore sold under other trademarks than the trademark LEGO.

The toy building elements are available in a large variety of shapes, sizes and colours. One difference between LEGO^{®} bricks and LEGO^{®} DUPLO^{®} bricks is the size in that a LEGO^{®} DUPLO^{®} brick is twice the size of a LEGO^{®} brick in all dimensions. The size of the traditional box-shaped LEGO^{®} toy building brick having 4*2 knobs on the upper side is about 3.2 cm in length, about 1.6 cm in width and about 0.96 cm in height (excluding knobs), and the diameter of each knob is about 0.48 cm. In contrast, the size of a LEGO^{®} DUPLO^{®} brick having 4*2 knobs on the upper side is about 6.4 cm in length, about 3.2 cm in width and about 1.92 cm in height (excluding knobs), and the diameter of each knob is about 0.96 cm.

The present cellulose ester compositions are useful in forming fibers, films, molded articles, and sheeting. The methods of forming the cellulose ester compositions into fibers, films, molded articles, and sheeting can be according to methods known in the art. Examples of potential molded articles include without limitation: medical devices, medical packaging, healthcare supplies, commercial foodservice products such as food pans, tumblers and storage boxes, bottles, food processors, blender and mixer bowls, utensils, water bottles, crisper trays, washing machine fronts, vacuum cleaner parts and toys. Other potential molded articles could include ophthalmic lenses and frames.

The invention further relates to articles of manufacture comprising the film(s) and/or sheet(s) containing cellulose ester compositions described herein. In embodiments, the films and/or sheets can be of any thickness which would be apparent to one of ordinary skill in the art.

The invention further relates to the film(s) and/or sheet(s) described herein. The methods of forming the cellulose ester compositions into film(s) and/or sheet(s) can include known methods in the art. Examples of film(s) and/or sheet(s) can include but are not limited to extruded film(s) and/or sheet(s), calendered film(s) and/or sheet(s), compression molded film(s) and/or sheet(s), solution casted film(s) and/or sheet(s). Methods of making film and/or sheet include but are not limited to extrusion, calendering, compression molding, wet block processing, dry block processing and solution casting.

The invention further relates to the molded articles described herein. The methods of forming the cellulose ester compositions into molded articles can include known methods in the art. Examples of molded articles can include but are not limited to injection molded articles, over molded articles, 2k (or 2 shot) molded articles, extrusion molded articles, injection blow molded articles, injection stretch blow molded articles and extrusion blow molded articles. Methods of making molded articles include but are not limited to injection molding, injection over molding, 2k (or 2 shot) injection molding, extrusion, injection blow molding, injection stretch blow molding, and extrusion blow molding. The processes can include any blow molding processes known in the art including, but not limited to, extrusion blow molding, extrusion stretch blow molding, injection blow molding, and injection stretch blow molding.

This invention includes any injection blow molding manufacturing process known in the art. Although not limited thereto, a typical description of injection blow molding (IBM) manufacturing process involves: 1) melting the composition in a reciprocating screw extruder; 2) injecting the molten composition into an injection mold to form a partially cooled tube closed at one end (i.e. a preform); 3) moving the preform into a blow mold having the desired finished shape around the preform and closing the blow mold around the preform; 4) blowing air into the preform, causing the preform to stretch and expand to fill the mold; 5) cooling the molded article; 6) ejecting the article from the mold.

This invention includes any injection stretch blow molding manufacturing process known in the art. Although not limited thereto, a typical description of injection stretch blow molding (ISBM) manufacturing process involves: 1) melting the composition in a reciprocating screw extruder; 2) injecting the molten composition into an injection mold to form a partially cooled tube closed at one end (i.e. a preform); 3) moving the preform into a blow mold having the desired finished shape around the preform and closing the blow mold around the preform; 4) stretching the preform using an interior stretch rod, and blowing air into the preform causing the preform to stretch and expand to fill the mold; 5) cooling the molded article; 6) ejecting the article from the mold.

This invention includes any extrusion blow molding manufacturing process known in the art. Although not limited thereto, a typical description of extrusion blow molding manufacturing process involves: 1) melting the composition in an extruder; 2) extruding the molten composition through a die to form a tube of molten polymer (i.e. a parison); 3) clamping a mold having the desired finished shape around the parison; 4) blowing air into the parison, causing the extrudate to stretch and expand to fill the mold; 5) cooling the molded article; 6) ejecting the article of the mold; and 7) removing excess plastic (commonly referred to as flash) from the article.

This invention can be further illustrated by the following examples of preferred embodiments thereof, although it will be understood that these examples are included merely for purposes of illustration and are not intended to limit the scope of the invention unless otherwise specifically indicated.

### Examples

### SECTION 1. Base Resin Testing

A cellulose ester composition was prepared by compounding cellulose ester CAP 482-20 (from Eastman) with PBS polymer and impact modifier (IM). The PBS polymer was FD92 grade PBS (from PTT MCC Biochem) and the IM was Kane Ace M570 acrylic core shell impact modifier (from Kaneka). The compounding was conducted on a Leistritz 18 mm (50:1 L/D ratio) twin screw extruder at a throughput of 18 lbs/hour with screw speed of 250 rpm and barrel temperature of 220°C. The resulting CE composition (C-04) was 86 wt% CAP, 8 wt% PBS and 6 wt% IM.

The C-04 resin and several other commercially available resins were subjected to a battery of testing. This testing was designed to set a baseline for the performance of the cellulose ester compositions in terms of physical properties and frictional performance.

Physical properties as typically reported on technical data sheets (TDS) were evaluated using injection-molded tensile or flexural bars using established test methodologies as defined by ASTM. For commercially available resins, drying and processing conditions reported on the technical data sheets were utilized for molding. For modified resins, processing conditions utilized were selected using that of the base resin.

Multiple tests were completed for all samples, including existing commercial resins as well as developmental, modified resins detailed in Section 3 below. These test methods are segmented as follows:
- Specific physical properties typically found on technical data sheets. Specific testing included tensile properties (ASTM D638), flexural properties (ASTM D790), notched Izod impact properties (ASTM D256), and heat deflection properties (ASTM D648). In all cases, standard conditioning and test protocols were followed for both commercial resins as well as developmental, modified resins.

- Frictional profile of the base resin, as reported as the static coefficient of friction and kinetic coefficient of friction (*µₛ* and *µₖ*, respectively), using a custom, in-house test method comparable to that of the traditional and standardized frictional sliding sled test (ASTM D1894). These values were measured using a Bruker Tribometer by intentionally contacting the surfaces of a pair of 4"x4"x1/8" plaques produced using injection molding. Gloves were worn at all times to avoid direct contact with the test specimens to avoid contaminating frictional data measurements. Once molded, a pair of plaques were utilized to measure frictional coefficients according to the following definitions:
   ∘ Static COF (µₛ), measured at the limit in which the contacting force between the two plaques (*F_{z}*) and relative speed between the two contacting plaques (*vₓ*) both approach zero, e.g.:
      ▪ *F_{z}* = 0.05 N, *vₓ =* 0.01 mm/sec
   ∘ Kinetic COF (µₖ), defined as the friction measured under constant force and relative speed between the two contacting plaques, e.g.:
      ▪ *F_{z}* = 3.00 N, *vₓ =* 10.0 mm/sec

A summary of commercial resins evaluated as "control" or "counter" examples is set forth in Table 1:

**Table 1. Summary of "control" or "counter" materials evaluated**

| Identifier | Base Resin |
|---|---|
| C-01 | Styrolution Terluran^{®} ABS GP-35 |
| C-02 | PC 2608 (Makrolon^{®} 2608 from Covestro) |
| C-03 | Eastman TREVA^{™} Engineering Bioplastic TR6021 |
| C-04 | CAP/PBS/IM (86/8/6 wt%) |
| C-05 | Eastman Tritan^{™} Copolyester TX1001 |
| C-06 | Eastman Tritan^{™} Copolyester GMX201 |
| C-07 | Eastman Tritan^{™} Copolyester DX4001 |

A summary of the physical properties for the control/counter materials is set forth in Table 2:

**Table 2 - Summary of physical properties of table 1 materials.**

| ID | TENSILE | | | | | NOTCHED IZOD | | Flexural | HDT | |
|---|---|---|---|---|---|---|---|---|---|---|
| | Yield | Yield % | Break | Break % | Modulus | Type | Energy | Modulus | 0.455MPa | 1.820 MPa |
| Units | [Mpa] | [%] | [MPa] | [%] | [MPa] | [NB, P, H, C] | [J/m] | [MPa] | [°C] | [°C] |
| C-01 | 46.1 | 2.4 | 33.4 | 16.2 | 2416.0 | P | 227.1 | 2300 | 89.0 | 78.0 |
| C-02 | 65.0 | 6.3 | 70.0 | 120.0 | 2350.0 | NB | 663.0 | 2350 | 139.0 | 127.0 |
| C-03 | 48.0 | 5.0 | 48.0 | 27.0 | 1881.0 | C | 192.0 | 2090 | 115.0 | 99.0 |
| C-04 | 47.0 | 4.4 | 44.9 | 25.3 | 1829.0 | C | 259.7 | 1825 | 96.4 | 87.8 |
| C-05 | 44.3 | 5.5 | 56.4 | 172.3 | 1629.0 | NB | 1105.7 | 1550 | 99.0 | 85.0 |
| C-06 | 55.7 | 4.1 | 54.9 | 289.7 | 2249.6 | C | 52.4 | 2442 | 80.8 | 70.4 |
| C-07 | 53.0 | 4.7 | 58.0 | 210.0 | 2040.0 | C | 64.0 | 2342 | 93.0 | 82.0 |

A review of the physical properties data from Table 2 reveals that resins C-01 and C-02 (ABS and polycarbonate (PC), respectively) exhibit higher stiffness, both in tensile and flexural modulus, than all other materials evaluated. Resins C-03 and C-04 (cellulosic materials) exhibit similar tensile properties, with the exception of modulus, as compared to C-01, as well as similar magnitude of impact toughness as measured by the notched Izod test. The toughness of resins C-06 and C-07 is significantly lower than that of C-01, while the stiffness of resin C-05 is the lowest of all commercial resins evaluated.

The frictional performance of table 1 materials was evaluated to quantify the static and kinetic coefficient of friction (*µₛ* and *µₖ,* respectively). The coefficient of friction (COF) values are listed below in Table 3.

**Table 3. Summary of frictional properties:**

| Sample | Tribometer (0.05 N Scan) | Tribometer (3.00N Scan) |
|---|---|---|
| | Static COF | Kinetic COFD |
| | [-] | [-] |
| C-01 | 0.175 | 0.142 |
| C-02 | 0.331 | 0.263 |
| C-03 | 0.578 | 0.439 |
| C-04 | 0.602 | 0.416 |
| C-05 | 1.065 | 0.743 |
| C-06 | 0.545 | 0.434 |
| C-07 | 0.686 | 0.538 |

A review of table 3 shows C-01 (ABS) and C-02 (PC) have similar frictional profiles, referring to the static and kinetic coefficient of friction, when measured according to a sliding-sled type test (Table 3). Further, resin C-01 offers lower frictional performance compared to all resins evaluated. As such, to enable functionality for applications that previously utilized ABS material and require similar frictional behavior, it would be necessary to modify the frictional performance of the other resins *(*e.g., C-03 through C-07) to match the performance of C-01 in frictional testing, while maintaining (or not significantly diminishing) physical properties compared to the non-modified base resins, most notably stiffness and impact toughness.

### SECTION 2. MODIFICATION

Modified samples were generated by using twin-screw compounding and various additive(s) to alter performance, most notably to modify frictional profile via incorporation of various additives. The additives tested vary in chemistry, including ranging from short-chain molecules (*e.g.,* waxes) to high- or ultra-high molecular weight organo-siloxanes (*e.g.,* PDMS). In a compounded formulation, it was found that the additives can function either as internal and/or external lubricants, depending on the specific additive chemistry, molecular weight, loading level, and functionality. Frictional additives utilized are listed below in Table 4.

**Table 4. Frictional additives utilized to modify resins**

| Sample | Additive |
|---|---|
| T-01 | Genioplast S |
| T-02 | Tegomer H-Si 6441 P |
| T-03 | Dowsil 4-7081 |

### SECTION 3. EXAMPLES

Multiple samples of cellulose ester compositions were generated by modification with different frictional additives and varying amounts of the additives. Samples were prepared via compounding using either a 30 or a 40 mm twin screw extruder at 25 lbs/h with a 2-hole die head or 150 lbs/h with a 5 hole die head respectively. All solids were pre-mixed and fed in the primary loss in weight feeder at the extruder feed throat. Any liquids were fed using a liquid loss in weight feeder at the first injector port, downstream of the extruder feed throat. The extruder barrel temperature increased from the feed throat to the die head using a profile as follows: 100°C at the feed throat, 175°C, 200°C, and 225°C at the die head. The melt temperature was measured to be 218-224°C. Extruded polymer strands were cooled using a water bath and air knife and pelletized with a pellet chopper system to produce a 2x3 mm cylindrical pellet.

Physical properties, before and after thermal aging protocol, were measured. Frictional performance of each formulation was also assessed using application-specific like-on-like functionality testing. Results are reported in the following tables, summarizing performance of modified formulations compared to control examples.

Table 5 summarizes the formulations evaluated in this study, CE-01 through CE-12, including the specific composition of frictional additives, in comparison to Control or Counter examples. Note: the "Base Resin" utilized for all frictionally modified cellulose ester samples was C-04.

**Table 5. Summary of Example Formulations Evaluated**

| Sample | Base Resin | Base Resin % | COF Additive | COF Additive% |
|---|---|---|---|---|
| C-01 | C-01 | 100.0 | | 0.00 |
| C-02 | C-02 | 100.0 | | 0.00 |
| C-03 | C-03 | 100.0 | | 0.00 |
| C-04 | C-04 | 100.0 | | 0.00 |
| TR-01 | C-04 | 99.7 | Dowsil 4-7081 | 0.30 |
| TR-02 | C-04 | 99.4 | Dowsil 4-7081 | 0.60 |
| TR-03 | C-04 | 99.0 | Dowsil 4-7081 | 1.00 |
| TR-04 | C-04 | 98.0 | Dowsil 4-7081 | 2.00 |
| TR-05 | C-04 | 97.0 | Dowsil 4-7081 | 3.00 |
| TR-06 | C-04 | 99.8 | Genioplast S | 0.25 |
| TR-07 | C-04 | 99.5 | Genioplast S | 0.50 |
| TR-08 | C-04 | 99.3 | Genioplast S | 0.75 |
| TR-09 | C-04 | 99.0 | Genioplast S | 1.00 |
| TR-10 | C-04 | 99.8 | Tegomer H-Si | 0.25 |
| TR-11 | C-04 | 99.3 | Tegomer H-Si | 0.75 |
| TR-12 | C-04 | 99.0 | Tegomer H-Si | 1.00 |
| C-05 | C-05 | 100 | | 0.00 |
| C-06 | C-06 | 100 | | 0.00 |
| C-07 | C-07 | 100 | | 0.00 |

Physical properties and performance were measured in accordance with procedures and test methods previously mentioned for all control, counter, and/or modified resins in Table 5. A summary of the physical properties including tensile properties, notched Izod impact toughness, flexural modulus, and heat deflection temperature is shown in Table 6 below.

**Table 6. Summary of TDS properties of Example formulations:**

| Sample | Tensile | | | | | Notched Izod | | Flexural | HDT | |
|---|---|---|---|---|---|---|---|---|---|---|
| | Yield | Yield % | Break | Break % | Modulus | Type | Energy | Modulus | 0.455 MPa | 1.820 MPa |
| | [MPa] | [%] | [MPa] | [%] | [MPa] | [NB, P, H, C]* | [J/m] | [MPa] | [°C] | [°C] |
| C-01 | 46.1 | 2.4 | 33.4 | 16.2 | 2416.0 | P | 227.1 | 2300 | 89.0 | 78.0 |
| C-02 | 65.0 | 6.3 | 70.0 | 120.0 | 2350.0 | NB | 663.0 | 2350 | 139.0 | 127.0 |
| C-03 | 48.0 | 5.0 | 48.0 | 27.0 | 1881.0 | C | 192.0 | 2090 | 115.0 | 99.0 |
| C-04 | 47.0 | 4.4 | 44.9 | 25.3 | 1829.0 | C | 259.7 | 1825 | 96.4 | 87.8 |
| TR-01 | 45.6 | 4.1 | 42.5 | 25.5 | 1949.0 | C | 184.8 | 1905 | 95.1 | 87.8 |
| TR-02 | 45.5 | 4.1 | 43.0 | 25.6 | 2004.0 | C | 169.5 | 1885 | 94.9 | 87.6 |
| TR-03 | 43.5 | 4.0 | 43.3 | 44.6 | 1897.0 | C | 168.1 | 1826 | 86.0 | 95.7 |
| TR-04 | 41.9 | 3.9 | 42.6 | 47.7 | 1881.0 | C | 147.7 | 1828 | 94.6 | 86.7 |
| TR-05 | 45.0 | 4.3 | 43.0 | 23.9 | 1751.0 | C | 157.0 | 1884 | 98.8 | 87.6 |
| TR-06 | 46.6 | 4.2 | 43.7 | 20.1 | 1918.0 | C | 219.4 | | 93.1 | 84.8 |
| TR-07 | 47.1 | 4.2 | 42.2 | 15.9 | 1945.0 | C | 215.0 | 1965 | 96.9 | 88.9 |
| TR-08 | 46.3 | 4.2 | 43.0 | 19.5 | 1921.0 | C | 235.5 | | 93.3 | 85.2 |
| TR-09 | 46.6 | 4.2 | 44.7 | 19.3 | 2031.0 | C | 242.3 | | 93.8 | 86.0 |
| TR-10 | 45.3 | 4.2 | 42.3 | 19.4 | 1860.0 | C | 244.9 | 1873 | 94.4 | 85.5 |
| TR-11 | 46.5 | 4.2 | 43.2 | 20.4 | 1890.0 | C | 246.8 | 1857 | 88.2 | 84.0 |
| TR-12 | 46.8 | 4.2 | 46.5 | 24.6 | 2008.0 | C | 234.2 | 1911 | 95.0 | 87.1 |
| C-05 | 44.3 | 5.5 | 56.4 | 172.3 | 1629.0 | NB | 1105.7 | 1550 | 99.0 | 85.0 |
| C-06 | 55.7 | 4.1 | 54.9 | 289.7 | 2249.6 | C | 52.4 | 2442 | 80.8 | 70.4 |
| C-07 | 53.0 | 4.7 | 58.0 | 210.0 | 2040.0 | C | 64.0 | 2342 | 93.0 | 82.0 |

| | | | | | | | | | | |
|---|---|---|---|---|---|---|---|---|---|---|
| *NB=no break, P=partial break, H=hinged break, C=complete break | | | | | | | | | | |

A review of Table 6 reveals that formulations with varying frictional additive type and loading level maintained tensile performance (Yield strength, Yield Strain, Break Strength, Break Strain) as compared to C-01 and non-modified cellulosic materials (C-03 and C-04). Specifically, some examples, e.g., TR-04, TR-10 and TR-11, maintained similar tensile and/or flexural modulus compared to non-modified cellulosic formulations of C-03 and/or C-04; some examples, e.g., TR-02, TR-09 and TR-12, demonstrated improved tensile and/or flexural modulus compared to non-modified cellulosic formulations of C-03 and/or C-04; and some examples, e.g., TR-07, TR-11 and TR-12, demonstrated similar notched Izod performance and/or thermal deflection performance compared to non-modified cellulosic formulation C-04.

Physical properties were also assessed for some examples after an accelerated aging protocol. This was completed by subjecting the samples to a thermal aging protocol, and then performing physical property testing on the thermally aged test bars, according to standard ASTM test methods as previously summarized. Testing both before and after thermal exposure was done to examine if any substantial change in performance and physical properties resulted from the frictional modification and additives. Table 7 lists tensile properties measured after standard conditioning (72 hours at 23 °C and 50% RH) and after a thermal aging protocol (200 hours at 60 °C).

**Table 7. TDS properties of examples after thermal aging.**

| Sample | Conditions | | Tensile | | | | |
|---|---|---|---|---|---|---|---|
| | Time [h] | Temp. [°C] | Yield [MPa] | Yield % [%] | Break [MPa] | Break% [%] | Modulus [MPa] |
| C-01 | 72 | 23 | 46.1 | 2.4 | 33.4 | 16.2 | 2416.0 |
| | 200 | 60 | 47.3 | 2.4 | 34.2 | 10.3 | 2292.0 |
| TR-03 | 72 | 23 | 43.5 | 4.0 | 43.3 | 44.6 | 1897.0 |
| | 200 | 50 | 46.4 | 4.3 | 41.9 | 15.4 | 1948.0 |
| TR-06 | 72 | 23 | 46.6 | 4.2 | 43.7 | 20.1 | 1918.0 |
| | 200 | 60 | 49.7 | 4.1 | 44.3 | 13.9 | 2161.0 |
| TR-09 | 72 | 23 | 46.6 | 4.2 | 44.7 | 19.3 | 2031.0 |
| | 200 | 60 | 50.8 | 4.1 | 46.4 | 13.6 | 2198.0 |
| TR-10 | 72 | 23 | 45.3 | 4.2 | 42.3 | 19.4 | 1860.0 |
| | 200 | 60 | 49.3 | 4.1 | 43.6 | 12.0 | 2097.0 |
| TR-12 | 72 | 23 | 46.8 | 4.2 | 46.5 | 24.6 | 2008.0 |
| | 200 | 60 | 50.6 | 4.1 | 46.2 | 15.7 | 2179.0 |

A review of Table 7 reveals that there was a minimal shift in the properties measured compared to example C-01.

Finally, frictional performance of certain modified samples was compared to control samples C-03 and C-04. The results are listed below in Table 8.

**Table 8. Summary of Frictional Properties.**

| Sample | Tribometer (0.05 N Scan) | Tribometer (3.00N Scan) |
|---|---|---|
| | Static COF | Kinetic COF |
| | [-] | [-] |
| C-03 | 0.613 | 0.444 |
| C-04 | 0.602 | 0.416 |
| TR-03 | 0.553 | 0.349 |
| TR-07 | 0.306 | 0.215 |
| TR-08 | 0.268 | 0.193 |
| TR-12 | 0.366 | 0.259 |

A review of Table 8 reveals that the static and kinetic COF was reduced for the modified examples compared to the C-03 and C-04 samples, with TR-07 and TR-08 showing the greatest reduction in COF with lower loading levels than TR-03 and TR-12. It was also noted that the COF values for the biobased TR-08 example were approaching those for the fossil fuel-based resin C-01.

Optical clarity, i.e., percent haze, was evaluated for the samples in Table 8. Haze percent was measured using a Datacolor 650 instrument with the haze add-on, under the C2 illuminant with a medium area view and UV 400 filter. Two measurements were taken, one under total transmission and one under diffuse transmission. The resulting haze values are listed below in Table 9.

**Table 9: Summary of Haze Properties.**

| Sample | Haze (%) |
|---|---|
| C-03 | 8.7 |
| C-04 | 9.8 |
| TR-03 | 58.2 |
| TR-07 | 58.6 |
| TR-08 | 70.0 |
| TR-12 | 18.9 |

A review of Table 9 reveals that the TR-12 formulation had significantly lower haze compared to the other COF additive modified formulations tested.

### SECTION 3. INJECTION MOLDED TOY BUILDING BRICKS

Toy building bricks as shown in Figure 1 have been injection molded. The bricks were manufactured in both LEGO^{®} size and in LEGO^{®} DUPLO^{®} size by injection molding of resin C-04 and modified resins TR-03, TR-07, TR-08 and TR-09, respectively. The injection molding parameters for manufacturing of the toy building bricks were as follows:

| | **LEGO brick 2x4** | **DUPLO brick 2x4** |
|---|---|---|
| Machine type: | Arburg 370 S / 600 - 290, Ø35 mm | Engel CC200 500/110 HL, Ø40 mm |
| Melt temperature: | 253 °C | 245 °C |
| Mold coolant temperature: | 55 °C | 65 °C |
| Temperature profile in the barrel: | 222-227-232-237-242 °C | 220-225-230-235-240 °C |
| Packing Pressure: | 700 bar | 750 bar |
| Dosing screw speed, peripheral: | 400 mm/s | 455 mm/s |

Resin C-03, i.e., commercially available TREVA grade, has lower impact strength and breaks in brittle mode (when tested for the requirements of toy building elements) and is therefore unsuitable for use to manufacture toy building elements. On top of that, resin C-03 has extremely high friction which also makes the resin unsuitable for toy building elements because the elements will stick together and will not be separated easily.

Resin C-04 has the correct level of impact strength to be a suitable material for toy building elements, but the frictional properties need to be modified by addition of COF additives as mentioned in Table 5 above.

Accordingly, toy building elements manufactured from modified resins TR-03 containing 1% Dowsil 4-7081 additive and modified resin TR-07 containing 0.5% Genioplast-S additive were tested, but these resins did not perform well in the LEGO 2x4 bricks due to very high level of friction and it was not possible to separate (attach-detach) the bricks resulting in poor play experience. It appears that higher amounts of these COF additives are required to obtain a suitable level of friction.

Toy building elements of modified resins TR-08 and TR-09 containing 0.75% and 1.0% Genioplast-S additive have also been manufactured and tested. The results revealed that these toy building elements possessed suitable level of friction.

## Claims

1. A cellulose ester composition comprising:
(a) at least one cellulose ester;
(b) at least one impact modifier in an amount from 1 to 15 weight percent;
(c) at least one frictional additive chosen from waxes and siloxanes in an amount from 0.1 to 15 weight percent; and
(d) optionally, one or more plasticizers in an amount from 0 to 15 weight percent;
wherein said composition has an HDT value greater than 85⁰C at 0.455 MPa as measured according to the description, and a notched Izod impact strength value greater than 80 J/m measured according to ASTM D256 on 3.2mm thick bars at 23⁰C, after conditioning the bars at 230°C and 50% RH for 48 hours.

2. The composition according to claim 1, wherein the frictional additive is a wax or a siloxane.

3. The composition according to claim 1, wherein the frictional additive is present in 0.1 to 4 weight percent and/or the impact modifier is present in 2 to 10 weight percent.

4. The composition according to claim 1, wherein the impact modifier is a core-shell impact modifier, such as an impact modifier chosen from an acrylic core-shell impact modifier, an ABS core-shell impact modifier, or an MBS core-shell impact modifier, preferably said impact modifier is an acrylic core-shell impact modifier.

5. The composition according to claim 4, wherein said impact modifier has a refractive index of 1.46-1.50 and has particle size of 0.01-2.0 um.

6. The composition according to claim 1, further comprising at least one polymeric aliphatic polyester (PAP) in an amount from 4 to 12 wt%, based on the total cellulose ester composition, wherein the PAP is an aliphatic polyester that comprises resides of a C₂ to C₄ alkane diol and residues of C₄ to C₈ alkyl dicarboxylic acid, or residues of a ring-opened lactone.

7. The composition according to claim 6, wherein said at least one PAP is chosen from poly(ethylene succinate) (PES), poly (butylene succinate) (PBS), poly(ethylene adipate) (PEA), poly(butylene adipate) (PBA), or mixtures thereof, preferably said at least one PAP is poly(butylene succinate) (PBS) or a copolymer of poly(butylene succinate) and poly(butylene adipate) (PBSA).

8. The composition according to claim 7, wherein said PAP is PBS or PBSA having an MFR (190⁰C, 2.16 kg) as measured according to the description less than 25 and/or said PAP is PBS or PBSA having an Elongation at Break as measured according to the description of 250% or greater.

9. The cellulose ester composition according to any one of claims 1 to 8, wherein said cellulose ester is chosen from one or more of cellulose propionate (CP), cellulose butyrate (CB), cellulose acetate propionate (CAP), cellulose acetate butyrate (CAB), cellulose propionate butyrate (CPB), cellulose tripropionate (CTP), or cellulose tributyrate (CTB), preferably said cellulose ester is chosen from cellulose acetate propionate (CAP) or cellulose acetate butyrate (CAB), and wherein the composition comprises 0 to less than 5 wt% plasticizer.

10. The composition according to any of claims 1 to 9, wherein said composition further comprises at least one additive selected from the group consisting of antioxidants, thermal stabilizers, mold release agents, antistatic agents, whitening agents, colorants, plasticizers, minerals, UV stabilizers, lubricants, nucleating agents, reinforcing fillers, glass fiber, carbon fiber, flame retardants, dyes, pigments, colorants, additional resins and combinations thereof, where the total amount of said additives, is less than 2 wt%, or less than 1 wt%, based on the total weight of the cellulose ester composition or where the total amount of said additives, other than the impact modifiers, frictional additives, plasticizers, and PAP, is less than 2 wt%, or less than 1 wt%, based on the total weight of the cellulose ester composition.

11. The composition according to any of claims 1 to 10, wherein said composition comprises a secondary antioxidant in a range from 0.05 to 0.5 wt%, and an acid scavenger in a range from 0.5 to 3 wt%, based on the total weight of the composition, and where the weight ratio of the acid scavenger to the secondary antioxidant is preferably in a range from 5:1 to 20:1.

12. The composition according to any of claims 1 to 11, wherein said composition has a static COF as measured according to the description of 0.6 or less and a kinetic COF as measured according to the description of 0.5 or less

13. A shaped or formed article comprising the composition of any one of claims 1 to 12.

14. The article according to claim 13, wherein the article is a construction toy or component thereof.

15. The article according to claim 13, wherein the article is an injection molded construction toy or component thereof.

## Patentansprüche

1. Celluloseesterzusammensetzung, umfassend:
(a) mindestens einen Celluloseester;
(b) mindestens einen Schlagzähmodifikator in einer Menge von 1 bis 15 Gewichtsprozent;
(c) mindestens ein Reibungsadditiv, ausgewählt aus Wachsen und Siloxanen, in einer Menge von 0,1 bis 15 Gewichtsprozent; und
(d) optional einen oder mehrere Weichmacher in einer Menge von 0 bis 15 Gewichtsprozent;
wobei die Zusammensetzung einen HDT-Wert von mehr als 85 °C bei 0,455 MPa, gemessen gemäß der Beschreibung, und einen Kerbschlagzähigkeitswert nach Izod von mehr als 80 J/m, gemessen gemäß ASTM D256 an 3,2 mm dicken Stäben bei 23 °C, aufweist, nachdem die Stäbe 48 Stunden lang bei 230°C und 50 % relativer Luftfeuchtigkeit konditioniert wurden.

2. Zusammensetzung nach Anspruch 1, wobei es sich bei dem Reibungsadditiv um ein Wachs oder ein Siloxan handelt.

3. Zusammensetzung nach Anspruch 1, wobei das Reibungsadditiv in einer Menge von 0,1 bis 4 Gewichtsprozent vorhanden ist und/oder der Schlagzähmodifikator in einer Menge von 2 bis 10 Gewichtsprozent vorhanden ist.

4. Zusammensetzung nach Anspruch 1, wobei der Schlagzähmodifikator ein Kern-Schale-Schlagzähmodifikator ist, wie beispielsweise ein Schlagzähmodifikator, der aus einem Acryl-Kern-Schale-Schlagzähmodifikator, einem ABS-Kern-Schale-Schlagzähmodifikator oder einem MBS-Kern-Schale-Schlagzähmodifikator ausgewählt ist, vorzugsweise wobei der Schlagzähmodifikator ein Acryl-Kern-Schale-Schlagzähmodifikator ist.

5. Zusammensetzung nach Anspruch 4, wobei der Schlagzähmodifikator einen Brechungsindex von 1,46-1,50 aufweist und eine Partikelgröße von 0,01-2,0 µm aufweist.

6. Zusammensetzung nach Anspruch 1, weiter umfassend mindestens einen polymeren aliphatischen Polyester (PAP) in einer Menge von 4 bis 12 Gew-%, basierend auf der gesamten Celluloseesterzusammensetzung, wobei es sich bei dem PAP um einen aliphatischen Polyester handelt, der Reste eines C₂ bis C₄-Alkandiols und Reste einer C₄ bis C₈-Alkyldicarbonsäure oder Reste eines ringgeöffneten Lactons umfasst.

7. Zusammensetzung nach Anspruch 6, wobei das mindestens eine PAP aus Poly(ethylensuccinat) (PES), Poly(butylensuccinat) (PBS), Poly(ethylenadipat) (PEA), Poly(butylenadipat) (PBA) oder Mischungen davon ausgewählt ist, vorzugsweise wobei das mindestens eine PAP Poly(butylensuccinat) (PBS) oder ein Copolymer aus Poly(butylensuccinat) und Poly(butylenadipat) (PBSA) ist.

8. Zusammensetzung nach Anspruch 7, wobei das PAP PBS oder PBSA ist, das einen gemäß der Beschreibung gemessenen MFR (190 °C, 2,16 kg) von weniger als 25 aufweist, und/oder das PAP PBS oder PBSA ist, das eine gemäß der Beschreibung gemessene Bruchdehnung von 250 % oder mehr aufweist.

9. Celluloseesterzusammensetzung nach einem der Ansprüche 1 bis 8, wobei der Celluloseester aus einem oder mehreren von Cellulosepropionat (CP), Cellulosebutyrat (CB), Celluloseacetatpropionat (CAP), Celluloseacetatbutyrat (CAB), Cellulosepropionatbutyrat (CPB), Cellulosetripropionat (CTP) oder Cellulosetributyrat (CTB) ausgewählt ist, vorzugsweise wobei der Celluloseester aus Celluloseacetatpropionat (CAP) oder Celluloseacetatbutyrat (CAB) ausgewählt ist, und wobei die Zusammensetzung 0 bis weniger als 5 Gew-% Weichmacher umfasst.

10. Zusammensetzung nach einem der Ansprüche 1 bis 9, wobei die Zusammensetzung weiter mindestens einen Zusatzstoff umfasst, ausgewählt aus der Gruppe bestehend aus Antioxidantien, Wärmestabilisatoren, Trennmitteln, Antistatika, Aufhellern, Farbstoffen, Weichmachern, Mineralien, UV-Stabilisatoren, Gleitmitteln, Nukleierungsmitteln, Verstärkungsfüllstoffen, Glasfasern, Kohlenstofffasern, Flammschutzmitteln, Farbstoffen, Pigmenten, Farbmitteln, zusätzlichen Harzen und Kombinationen davon, wobei die Gesamtmenge der Additive weniger als 2 Gew.-% oder weniger als 1 Gew.-%, basierend auf dem Gesamtgewicht der Celluloseesterzusammensetzung, beträgt oder wobei die Gesamtmenge der Additive, mit Ausnahme der Schlagzähmodifikatoren, Reibungsadditive, Weichmacher und PAP, weniger als 2 Gew.-% oder weniger als 1 Gew.- %, basierend auf dem Gesamtgewicht der Celluloseesterzusammensetzung, beträgt.

11. Zusammensetzung nach einem der Ansprüche 1 bis 10, wobei die Zusammensetzung ein sekundäres Antioxidans in einem Bereich von 0,05 bis 0,5 Gew.-% und einen Säurefänger in einem Bereich von 0,5 bis 3 Gew.-%, basierend auf dem Gesamtgewicht der Zusammensetzung, umfasst und wobei das Gewichtsverhältnis des Säurefängers zum sekundären Antioxidans vorzugsweise in einem Bereich von 5:1 bis 20:1 liegt.

12. Zusammensetzung nach einem der Ansprüche 1 bis 11, wobei die Zusammensetzung einen statischen COF, gemessen gemäß der Beschreibung, von 0,6 oder weniger und einen kinetischen COF, gemessen gemäß der Beschreibung, von 0,5 oder weniger aufweist.

13. Gestalteter oder geformter Gegenstand, der die Zusammensetzung nach einem der Ansprüche 1 bis 12 umfasst.

14. Gegenstand nach Anspruch 13, wobei es sich bei dem Gegenstand um ein Konstruktionsspielzeug oder einen Bestandteil davon handelt.

15. Gegenstand nach Anspruch 13, wobei es sich bei dem Gegenstand um ein spritzgegossenes Konstruktionsspielzeug oder einen Bestandteil davon handelt.

## Revendications

1. Composition d'ester de cellulose comprenant :
(a) au moins un ester de cellulose ;
(b) au moins un modificateur d'impact en une quantité de 1 à 15 pour cent en poids ;
(c) au moins un additif de friction choisi parmi des cires et des siloxanes en une quantité de 0,1 à 15 pour cent en poids ; et
d) éventuellement, un ou plusieurs plastifiants en une quantité de 0 à 15 pour cent en poids ;
dans laquelle ladite composition présente une valeur HDT supérieure à 85 °C à 0,455 MPa, telle que mesurée selon la description, et une valeur de résistance au choc Izod sur éprouvette entaillée supérieure à 80 J/m mesurée selon la norme ASTM D256 sur des barres de 3,2 mm d'épaisseur à 23 °C, après conditionnement des barres à 230 °C et 50 % d'humidité relative pendant 48 heures.

2. Composition selon la revendication 1, dans laquelle l'additif de friction est une cire ou un siloxane.

3. Composition selon la revendication 1, dans laquelle l'additif de friction est présent à raison de 0,1 à 4 pour cent en poids et/ou le modificateur d'impact est présent à raison de 2 à 10 pour cent en poids.

4. Composition selon la revendication 1, dans laquelle le modificateur d'impact est un modificateur d'impact à noyau-coquille, tel qu'un modificateur d'impact choisi parmi un modificateur d'impact à noyau-coquille acrylique, un modificateur d'impact à noyau-coquille ABS ou un modificateur d'impact à noyau-coquille MBS, de préférence ledit modificateur d'impact est un modificateur d'impact à noyau-coquille acrylique.

5. Composition selon la revendication 4, dans laquelle ledit modificateur d'impact présente un indice de réfraction de 1,46-1,50 et une taille de particules de 0,01 -2,0 µm.

6. Composition selon la revendication 1, comprenant en outre au moins un polyester aliphatique polymère (PAP) en une quantité de 4 à 12 % en poids, sur la base de la composition totale en ester de cellulose, dans laquelle le PAP est un polyester aliphatique qui comprend des résidus d'un alcane diol en C₂ à C₄ et des résidus d'acide dicarboxylique alkyle en C₄ à C₈ ou des résidus d'une lactone à cycle ouvert.

7. Composition selon la revendication 6, dans laquelle ledit au moins un PAP est choisi parmi le poly(succinate d'éthylène) (PES), le poly(succinate de butylène) (PBS), le poly(adipate d'éthylène) (PEA), le poly(adipate de butylène) (PBA) ou des mélanges de ceux-ci, de préférence ledit au moins un PAP est le poly(succinate de butylène) (PBS) ou un copolymère de poly(succinate de butylène) et de poly(adipate de butylène) (PBSA).

8. Composition selon la revendication 7, dans laquelle ledit PAP est du PBS ou du PBSA présentant un MFR (190 °C, 2,16 kg) tel que mesuré selon la description inférieur à 25 et/ou ledit PAP est un PBS ou un PBSA présentant un allongement à la rupture, tel que mesuré selon la description, de 250 % ou plus.

9. Composition d'ester de cellulose selon l'une quelconque des revendications 1 à 8, dans laquelle ledit ester de cellulose est choisi parmi un ou plusieurs parmi le propionate de cellulose (CP), le butyrate de cellulose (CB), le propionate d'acétate de cellulose (CAP), le butyrate d'acétate de cellulose (CAB), le butyrate de propionate de cellulose (CPB), le tripropionate de cellulose (CTP) ou le tributyrate de cellulose (CTB), de préférence ledit ester de cellulose est choisi parmi le propionate d'acétate de cellulose (CAP) ou le butyrate d'acétate de cellulose (CAB) et dans laquelle la composition comprend de 0 à moins de 5 % en poids de plastifiant.

10. Composition selon l'une quelconque des revendications 1 à 9, dans laquelle ladite composition comprend en outre au moins un additif choisi parmi le groupe constitué des antioxydants, des stabilisants thermiques, des agents de démoulage, des agents antistatiques, des agents de blanchiment, des colorants, des plastifiants, des minéraux, des stabilisateurs UV, des lubrifiants, des agents de nucléation, des charges de renforcement, des fibres de verre, des fibres de carbone, des retardateurs de flamme, des teintures, des pigments, des colorants, des résines additionnelles et des combinaisons de ceux-ci, dans laquelle la quantité totale desdits additifs est inférieure à 2 % en poids, ou inférieure à 1 % en poids, sur la base du poids total de la composition d'ester de cellulose ou lorsque la quantité totale desdits additifs, autres que les modificateurs d'impact, les additifs de friction, les plastifiants et le PAP, est inférieure à 2 % en poids, ou inférieure à 1 % en poids, sur la base du poids total de la composition d'ester de cellulose.

11. Composition selon l'une quelconque des revendications 1 à 10, dans laquelle ladite composition comprend un antioxydant secondaire en une quantité allant de 0,05 à 0,5 % en poids et un piégeur d'acide dans une plage de 0,5 à 3 % en poids, sur la base du poids total de la composition, et dans laquelle le rapport pondéral entre le piégeur d'acide et l'antioxydant secondaire est de préférence dans la plage de 5/1 à 20/1.

12. Composition selon l'une quelconque des revendications 1 à 11, dans laquelle ladite composition présente un COF statique tel que mesuré selon la description de 0,6 ou moins et un COF cinétique tel que mesuré selon la description de 0,5 ou moins.

13. Article façonné ou moulé comprenant la composition de l'une quelconque des revendications 1 à 12.

14. Article selon la revendication 13, dans lequel l'article est un jouet de construction ou un composant de celui-ci.

15. Article selon la revendication 13, dans lequel l'article est un jouet de construction moulé par injection ou un composant de celui-ci.
